(19) **Europäisches Patentamt**
**European Patent Office**
**Office européen des brevets**

(11) **EP 1 348 148 B2**

(12) **NEW EUROPEAN PATENT SPECIFICATION**
After opposition procedure

(45) Date of publication and mention
of the opposition decision:
**24.06.2015 Bulletin 2015/26**

(45) Mention of the grant of the patent:
**16.07.2008 Bulletin 2008/29**

(21) Application number: **01273496.8**

(22) Date of filing: **21.12.2001**

(51) Int Cl.:
***H04N 5/232*** *(2006.01)*    ***H04N 5/235*** *(2006.01)*
***G02B 7/36*** *(2006.01)*

(86) International application number:
**PCT/SE2001/002889**

(87) International publication number:
**WO 2002/059692 (01.08.2002 Gazette 2002/31)**

(54) **CAMERA**

KAMERA

CAMÉRA

(84) Designated Contracting States:
**AT BE CH CY DE DK ES FI FR GB GR IE IT LI LU MC NL PT SE TR**

(30) Priority: **22.12.2000 SE 0004836**

(43) Date of publication of application:
**01.10.2003 Bulletin 2003/40**

(73) Proprietors:
- **Hagene, Jon Kristian**
  **1570 Dilling (NO)**
- **AFSENIUS, Sven-Åke**
  **181 56 Lidingö (SE)**

(72) Inventors:
- **AFSENIUS, Sven-Ake**
  **S-181 56 Lidingö (SE)**
- **HAGENE, Jon, Kristian**
  **N-1570 Dilling (NO)**

(56) References cited:
| | |
|---|---|
| **US-A- 5 172 236** | **US-A- 5 325 449** |
| **US-A- 5 875 360** | **US-A- 5 930 533** |
| **US-A- 6 163 652** | **US-A- 6 163 653** |
| **US-B1- 6 201 899** | |

<u>Remarks:</u>
The file contains technical information submitted after the application was filed and not included in this specification

EP 1 348 148 B2

**Description**

The present invention refers to a camera with an image registration device in its image plane, preferably an electronic one like a CCD sensor. To be more specific, it's an electronic instrument with an objective lens, a pixel-oriented image detector with entrance surface, an electronic image memory for saving image information originating in the same detector and an automatic focusing device, according to a preferred mode of operation. The invention is furthermore referring to the corresponding methods, some of them applicable for (emulsion-) film cameras as well, however with a subsequent image process.

**Purpose of the invention**

The purpose of the present invention is to accomplish an instrument where hitherto restrictive conditions related to photography are removed more or less. A major such limitation is the practical impossibility to produce photos of high image definition for all ranges. And strictly speaking, it's equally difficult to attain short depths of field, suppressing image detail being outside this interval, such residual detail-blur manifesting another restriction. A third limitation of similar character, is associated with the frequently occurring situation of large intensity variations across a scene, usually in-between light and shade, making it impossible to register bright and dark areas in full detail.

It may be recalled that depth-of-field for standard photographic lenses depends upon relative aperture. However a significant stop will also degrade the feasible image resolution, due to wave properties of light. Another consequence of stopping down an objective is loss of light which however may become less conclusive due to high sensitivity characteristics of modern electronic pixel-oriented image registration.

To make pictures without being committed to these restrictions mentioned, has so far been reserved for the fine arts like sketching and painting more or less. This applies to depth of field, which is hardly regarded as a problem by an artist while scenes where well-lit and poorly illuminated or dark objects alternate, constitute another such example where some schools of the old classic arts excel. It's a purpose of the present invention to gain a corresponding freedom for photographers by means of a camera as defined in claim 1 and the method of photographing a scene as defined in claim 17.

Prior Art

A method to combine differently-focused pictures in order to produce a compound image with improved image definition, is disclosed by US-patent 4 661 986: A video signal registration takes place for each state of focus for a three-dimensional scene and frequency spectra related to these video signals support a comparison, row by row across the pictures, enabling selection of optimal pixels. Even successively registered images with one and the same camera are described. A similar method and device is described in US-patent 6 201 899.

Several camera designs with automatic focusing devices ('Autofocus') and where the object is to adjust for a 'best' image definition, are known. One such design is measuring the time-lapse of an ultrasound pulse. Other systems work with contrast detection, where a focusing scan takes place and a setting for maximum contrast is assessed. The contrast is measured by two or several electronic sensors being mounted in a beamsplitter arrangement. The adjustment is performed for a minor select part of the image, usually in the middle. Such a camera, denominated Konica C35AF, was introduced around 1978 (cf. the periodical FOTO no. 1, 1978). Descriptions of similar systems may be found in American patents 4 078 171 and 4 078 172. Adjustment of focus, according to these cases, is optimal for one range only, while objects falling outside this plane (or curved surface, i.e. where sharp reproduction takes place, answering to the contrast measurement), become blurred more or less, depending upon the spread of object-distances.

An entirely different objective lens design aiming at the movie industry and following US-patent 4 741 605, makes it possible to focus upon two (or a few more) different distances at the same time. One or several aperture lenses, are here inserted in order to cover part of the entrance aperture. Sharp image of a nearby object is created by placing this lens attachment in a favourable lateral position while the free aperture part is similarly depicting remoter objects. A drawback of this approach is that the ray path via the lens attachment is still creating a blurred, yet almost invisible, image of the remote object, while the other ray path through the unobstructed aperture creates a similarly blurred projection of nearby objects. These totally unfocused images are therefore contributing with 'background illumination', scattered over the image surface, thus as a consequence halving the image contrast more or less (i.e. for two images).

As to the other problem with photos having pronounced lights and shades, there are few remedies known, except for using the most optimal positive/negative film material/sensor and to protect against straylight wherever feasible. Paper copies are problematic while slides do somewhat better.

Conventional methods of combining differently-focused pictures are disclosed in WO-A-00/22566, WO-A-97/25690, US-A-5 325 449.

United States patent number 5,172,236 Takemoto et al, describes a "pan-focusing" apparatus giving extended depth of field. Several differently focused images are acquired and are divided into equally sized geometrical regions or segments which have borders at the same locations in all the differently focused images. For each segment and different focusing the amplitude of the high frequency components is calculated. A composite resulting image is made selecting image information within each region or segment from the focused image which as the highest amplitude of the high frequency components.

## Summary of the Invention

To sum up, this and other objects and advantages of an electrooptical instrument, designed in accordance with the present invention and described in the introductory passage or further below, is attained by means of distinctive features mentioned in the descriptive parts of independent patent claims enclosed. Advantageous embodiments are further dealt with in the dependent claims.

The invention may be summed up in brief albeit without restrictive purposes, as follows:

Several exposures, equivalent to the same several pictures, are made with various camera settings.

These camera settings may be performed in different ways and are to be adjusted in-between exposures:

Said settings differ as regards Focusing or Exposure or combinations of the two: Several pictures are thus differently focused and/or they may be differently exposed as regards Relative Aperture, Exposure time, Detector sensitivity and Colour balance in various combinations.

Each of these pictures are similarly subdivided into many sub-image segments or image parts. Each such portion of a scene is thus to be found in one set of image parts, albeit recorded with variable camera settings. The subdivision into image parts or sub- images may be performed (by means of an Image-Sharpness Detector) in different ways, however subject to the following conditions:

1. It's a geometrical subdivision into small image parts or sub-images.
2. The sub-division is furthermore made similar on respective said pictures, i.e. same part of a scene is depicted on all sub-images of a set corresponding to each other, albeit registered on several pictures.
3. The sub-division is done initially, i.e. before an Image-Sharpness detector estimates the image definition inside each of said sub-images.

This is a similar technique as described in US patent 5,172,236 Takemoto et al. being refned in this Patent application.

It's obvious for a specialist scrutinizing this segment based technique that a multitude of variations are possible. Like a subdivision Into segments/sub-images, which can be firm or adjustable for numerous patterns.

Said Image-sharpness detector is furthermore identifying those sub-images from each corresponding set, which have superior image definition or resolution. Same device may utilize various techniques, a common one being to estimate image contrast, i.e. intensity variations inbetween pixels or picture elements, within each sub-image of a corresponding set and select that sub-image having more contrast than the others, answering to the highest image definition or resolution available from a corresponding set. The image contrast C in-between two adjacent picture areas of intensities A and B, is here defined as an expression like $C = A-B/A+B$ where A is bigger than B. This constitutes a 'prior art' Autofocus method, still in use for focusing some cameras, however applied more extensively in extended depth of field applications, where all sub-images, over a picture are subject to said measurement procedure, instead of just one or a few sub-images, being the number of measured 'spots' for a regular Autofocus camera.

One image part from each such group is furthermore selected and merged into a whole resultant image. The purpose of the present invention is thus to merge Image Information from image-parts having maximum image definition, into a final compound image with overall improved definition or Depth-of Field, being forwarded to and stored in a final memory (M), while remaining parts are rejected. A final picture with reduced Depth of Field can also be accomplished by using same basic technique.

Another attractive set-up for the contrast measurement procedure goes as follows: A kind of background or reference image (like the infinitely-focused exposure of a set) Is here assigned, however parts with higher contrast are successively replacing the low-contrast areas as the process goes on. Less image memory is consequently required, this being to advantage. Said Image-Sharpness detector may also utilize other methods, notably the Template method, being disclosed in independent claim 1. Object distances, which indirectly pin-point optimally focused sub-images from sets of corresponding image-parts, can furthermore be measured directly with ultrasound or laser-light for each image part. Time-lapse or parallax measurements are also practicable. Various sophistication levels as regards focusing are conceivable when implementing the present invention. However technical solutions with minimal mechanical complications are sometimes at a premium, involving two or several fixed but differently-focused image-sensors, located behind some beam-splitter system. Other designs may include a mobile or adjustable objective lens, *viz.* adjustable relative one image plane only. An undulating lens of that kind may prove less successful for anematographic use however. A rotating disk with discrete steps of various thickness, may provide a better approach in that case.

No optimization of image definition takes place when photographing according to another modification of the present invention: Instead a camera makes, preferably in fast sequence, several differently focused and/or exposed image records. The subsequent image processing, including possible subdivision into sub-images, search for image parts with optimal resolution and final assembly of a resultant image, is then taking place in a separate unit. This modification is also applicable to other, non-digital sensor materials, like ordinary (emulsion-) film.

Swedish Patent application 0004836-3 corresponds to the present patent application.

**Brief description of Figures**

Fig 1 shows a digital camera with beamsplitter D and two differently focused image planes. The objective OB is projecting a scene F onto image planes B1 and B2 with associated image sensors CCD1 and CCD2. A processing unit P is receiving image information from the two sensors. It's dividing the images into small image parts or sub-images, selecting and forwarding those having superior image definition, to memory M.

Fig 2 displays a surveillance camera application

Fig 3a is displaying an arrangement where focusing is effected by means of moving an objective lens.

Fig 3b exhibits a similar design, except that some range-finding applies to each little image part, this being decisive for a choice of optimally focused segment(s) from each set, thus no contrast measurements taking place here.

Fig 4 shows another digital camera with objective lens OB, a variable illumination-limiting device (like an aperture stop) VS and an electronic sensor CCD registering images. An exposure meter E is furthermore dividing the image into parts i, i+1, i+2...which are individually and differently exposed. There is finally an electronic image processing unit P which is, among other things, restoring and adjusting for final light intensities, as visible at the presentation (or memory) unit M.

**Description of Embodiments of the Invention**

The present invention applies to an electrooptical instrument with capacity to eliminate some of the more fundamental restrictions which have always prevailed within photography. Most examples exemplifying the invention here aim at depth-of-field improvements. However, other fundamental limitations may be remedied in an essentially similar or equivalent way.

It's an instrument with capacity to measure image definition, optically projecting a scene upon an electronic detector, registering images/frames in different states of focus, and all subdivided into smaller parts. That part picture having best image definition is chosen and merged into a resultant final image, being saved in an electronic memory and/or being presented as a picture on paper or an image screen.

The invention, according to various configurations in the characteristic parts of relevant claims presented here, is thereby solving the problem to obtain high image definition for various focal distances, in one and the same image.

The most important design parameter for an image-registering instrument, may well be highest possible image resolution, i.e. to produce a sharp image over largest possible portions of the total field of view. However, strictly speaking, sharp images are only created for objects staying in an optical focus, while objects out of focus, within the field of view, remain more or less blurred, which-may often be to disadvantage. For example a soldier using night vision goggles (Cf. Patent SE450671 corresponding to US-A-4 826 302 may stumble against nearby branches, barb wire etc because he can only focus on one distance at a time and small nearby objects are thus wiped out, because the device is mostly focused further away due to other practical reasons. Another example may involve an automatic surveillance camera, where the task is to identify persons and objects at various distances at the same time but where only one focal distance at a time, is feasible. Even a still camera photographer may experience problems associated with various object distances, for example when attempting to take an indoor photo full of details, showing the distant wall as well as nearby objects, in high resolution. And the need to focus on two actors at the same time, happening to be at differing distances from the camera, is a problem from the film industry. A remedy for this last problem has been suggested (Cf. US Patent 4,741,605) as follows: A movie film camera lens aperture is divided into parts in such a way that two differently- focused but superposed images are created. However, consequently the two images in focus are also merged with two other images out of focus, thus halving the image contrast more or less. This method does furthermore only provide two focal distances while a normal field of view may be built up of objects with several more states of focus, some of them even rapidly changing/moving. The effective F-number of the instrument is also influenced by this technique.

The present invention does improve this situation inasmuch that many more focal distances can be used and unfocused/blurred image information is furthermore rejected so that the final image is mostly containing high definition and high contrast contributions.

Thus, an instrument according to the present invention, with capability to refocus continuously for all distances in-between infinity and closest range more or less, then register and sort the image information as described, should be able to produce high image definition all over the final image. Or in other words, an instrument according to the present invention is *de facto* producing images with infinite depth of field. 'Depth of field' is a commonly recognised measure for the distance interval, centred around an associated focal distance, within which a photo remains sharp. A short such 'in depth' distance is equivalent to poor depth of field, being degraded by working with high speed lenses (Low F-number) and large optical entrance apertures or long focal lengths in general, like telephoto lenses.

The main object of the present invention, i.e. to improve the depth of field, is by no means a new thought: The traditional mode of improving optical instruments in this respect has been by decreasing objective lens diameters, like stopping down a camera lens, cf. above. However as a result, the lenses gather less light, implying other drawbacks like longer exposure times, giving associated motion blur and grainier film, and these effects degrade the definition of a final image. The objective lens diameter may even be reduced to the size of a needle point aperture of a so called *Camera Obscura,* with the capacity to project images with almost infinite depth of field, however unfortunately increasing the photographic exposure times to hours or days at the same time, making this method practically useless for most applications.

Another wellknown remedy for depth-of-field problems, is to miniaturise the instrument, i.e. design for a shorter system focal length, like when Leica introduced the new and still prevailing 35 mm minicameras. Another similar development has taken place more recently for those small digital cameras having only about 6x8 mm image size and a normal focal length around 12 mm, thus just one quarter of the equivalent minicamera, where the frame size is 24x36mm and focal length is around 50 mm. Even the image intensifier technique undergoes a similar development, with image/ photocathode reductions from 25 mm or bigger in the 1960-70's to 18mm during the 1980-90's and a further reduction to 12 or 16 millimetres today in USA and Europe (Cf. US Patent 6025957).

This miniaturising gives an improved depth of field in general, however at a cost of reducing the number of image points/pixels being resolved across an image area. This development was nevertheless made possible by an equivalent improvement of image resolution and light sensitivity of the registering components involved (like CCD sensors, Image Intensifier Tubes and Photographic film). These above-mentioned methods offer some relief but the depth-of-field problem is still there. One professional category only, namely the landscape-painters, have from time immemorial been able to master these problems, by using the oldest known optical device (the eye): Sometimes painting the nearby foreground, sometimes the background but reproducing each little object by itself, thus assembling a whole painting from a great many differently focused image parts. The later observer may therefore (apart from some more artistic qualities) appreciate the 'infinite depth of field' of the old paintings: A painting is watched from a certain distance, even though real objects from widely varying ranges are reproduced. This artistic way of metamorphosing a scene, with entirely different (optimal) states of focus, into a flat and everywhere sharp reproduction and with one state of focus only, has certain features in common with the present invention.

The above-mentioned depth-of-field- problems can be eliminated or at least reduced by utilising some characteristic features related to the present invention, following the introductory passage and exemplified below by an electrooptical instrument like a video camera, a digital still camera, an image intensifier instrument or a surveillance camera (i.e. 'Instrument' for short):

    1. The instrument is provided with an automatic focusing device (1) so that the objective lens (2) may be focused on more than one object distance.

    2. The initial image B1 is focused on a suitable distance, like 'infinity'.

    3. The same image is registered by the detector (3), thereafter transferred to an image memory (4).

    4. There is an image-part-function (5) associated with the image memory which subdivides the same whole image into smaller sub-image segments B1i, B1(i+1), B1(i+2)...thus making it possible to address these image parts, making them individually accessible from the detector and/or image memory.

    5. The instrument is next focused for another and usually pre-determined object distance and a more recent image frame B2 is registered by the detector.

    6. The Instrument is also incorporating an image-definition meter (6) with capacity to assess the image resolution of each little sub-image individually.

    7. This image-definition detector is associated with a comparison-function (7), enabling comparison of image resolution for each sub-image couple, i.e. B1i with B2i.

8. Initial image-part information B1i is replaced by corresponding later sub-image information from B2i, in case image definition of B2i is estimated to be superior to B1i;

Or alternatively, later image information of B2i is discarded while previous information from B1i is retained without alteration of memory, if the opposite situation occurs, i.e. the subimage B2i appears to be less in focus than B1i. This selection procedure is repeated for all image parts 1,2,3...i.

9. The Instrument is thereafter refocused again, more pictures B3, B4...Bn being registered in the process and the same procedure (#5-9) is repeated.

10. The resultant image (i.e. at least as far as depth-of-field-enhancement procedures of this invention goes) is finally in memory, when the last focusing step has been finished.

The simplest design of this 'Instrument' involves an objective lens(2), however other optical system components like teleconverters, eyepieces, scanning- or (image) relay-systems may be included for certain applications, making the total system more complex. Automatic focusing devices (1), (not to be confused with the well known 'Autofocus', see below), can be set up in many different ways: Like in time-sequence, so that different focuses appear in succession. However a static mode, for example by means of beamsplitters, is also feasible, involving several active and differently focused image planes at one and the same time. There are detectors (3) of various kinds, but the so called CCD chip, made up of a two-dimensional matrix of pixel-sensors, is most frequently occurring in video- and digital still cameras. There are also infrared (IR; like pyroelectric) sensors, vidicon- and image- intensifier tubes. The detectors may also be singular or linear detector arrays. Image memory (4) is here a wide concept covering electronic computer memories associated with the instrument, magnetic tapes, RAMs, hard- or floppy disks plus CD or DVD disks and 'memory cards', commonly delivered these days with digital cameras: This latter kind is constituting a final memory for an Instrument, like would also (sort of) be the case for an image printing process, where digital information maybe lost, image information nevertheless surviving on the photographic paper. And associated with this are presentations on image screens for TVs and computers and other image viewers or screens which only retain an image as long as the presentation lasts. It may prove advantageous for some applications to use several memories, like for the image process inside an instrument plus a final memory where only processed images are stored. The pictures Bn are subdivided (5) into image segments or subimages Bni, each of them (if applicable, see below) big enough for some contrast measurement, however still small enough for ensuring continuity and uniform image definition across the final picture: The instrument must therefore incorporate an image definition-meter/analyser (6) to bring this about, like a passive contrast measurement device of the kind prevailing in video- and still cameras since long ago. The first introduction of such a camera on the market was possibly by the manufacturer Konica with its 'Konica C35AF camera (Cf. an article in the periodical FOTO 1/78), incorporating an electronic range-finder, founded upon the principle that maximum image contrast and resolution occur simultaneously more or less. The focal distance for a small picture area in the central field of view was thus measured with this camera through a separate viewfinder, identifying a state of focus with optimal image contrast, thus approximately answering to the best resolution, whereupon the lens of the Konica camera was automatically refocused accordingly. This is the common method even today more or less, cf. for example the Olympus digital still camera C-300ZOOM, having a somewhat similar autofocus device according to the manual delivered with the camera.

There is an important distinction however, as regards how this contrast measurement technique is utilised, according to the present invention: While the above-mentioned commercially available consumer cameras are adjusting for a best focus using this technique, the very opposite takes place for instruments, according to the present invention: Instead a sequence of images with pre-defined states of focus are exposed and the image sharpness measurement technique is applied afterwards in order to select (7) the sharpest sub-images. And there is another fundamental difference: Image sharpness measurements, according to the present invention, take place all over the image/field of view, while Autofocus cameras according to present day technique, are mostly measuring inside a small image segment only. It may thus be asserted that an instrument, incorporating the present invention, may well use elements of the prior art, but in an entirely new context. Explicit range measurements are not necessitated by this technique, however it's feasible to assess average distances for each image segment because optimal states of focus and thus (in principle) the appropriate focal distances are known by means of this contrast measurement approach. The introduction of a distance measurement function of this sort provides the basis for continuous mapping of projected scenes in three dimensions, because the information of each sub-image segment (Co-ordinates X and Y) is now associated with a distance Z (Co-ordinate in depth). It would therefore be possible to transfer this image and distance information to a computer, the object for example being to produce three-dimensional design documentation for the scene depicted, thus the basis for applications like 3D presentation, animation etc. A small video camera can be moved inside reduced scale models of estate areas, within human vascular systems, or inside the cavities of machinery, sewage systems or scenes which are to be animated for film or computer game purposes, not to mention industrial robots requiring information about all three dimensions when manoeuvring its arms: All these applications mentioned may, as a consequence of the present invention, benefit from the continued supply of three-dimensional information, related to each image part of the scene.

As a matter of principle, it's possible to carry out the distance- or image definition measurements on one occasion only, for a stationary instrument, i.e. same aiming all the time, involving a static scenery more or less. This application is explicitly exemplified by installation of a stationary surveillance camera as follows: The camera undergoes the above mentioned process #1-10 during installation and this is possibly repeated after each fresh start up. It's preferably done very precisely, by means of many nearby states of focus, the whole procedure being repeated a number of times so that an average of many cycles #1-10 may be estimated, the optimal focus of each image part thus being assessed more precisely than would otherwise be the case.

The camera may henceforth be operated without necessarily using image definition- measurements, because the fixed and essentially stationary scene ranges are already known, the most optimal states of focus for each image part thus remaining the same more or less, being saved in a memory. Temporary and stochastic disturbances, like waves on a sea or swaying trees at the horizon, may furthermore influence wide areas of a fixed scene during stormy days, thus affecting the image definition meter. A better solution would be to save this above-mentioned range-finding procedure for some calm and clear day without that multitude of fast flutter.

A frequent and major task for surveillance cameras is to detect and observe new objects, figures etc emerging on an otherwise static scene. Such objects may or may not emerge at the same, i.e. initial, object distance from the camera, thus appearing more or less blurred, depending upon current depth of field and other parameters, in case the image definition detector was switched off. However turning this meter on again, it would be possible to detect new objects within the field of view by comparing the initially assessed states of focus for each sub-image, with any more recent such measurement, thus enabling detection of changes within the field of view, i.e. for each specific sub-image segment, causing the alarm to go (blinking screens, alarm bells etc).

The function of an image definition meter may involve some algorithm for the assessment of image contrast (Cf. US Patents 4,078,171 and 4,078,172 assigned to Honeywell) within a small sub-image. Let's suppose this is done with n detector elements, uniformly distributed over the sub-image. At least two such detector elements are necessary for the contrast measurement: Suppose an (image) focus-edge is crossing this segment: A bright sunlit house wall (with intensity Lmax) being (for example) registered by detector D1 on one side and a uniform but dark background (intensity Lmin) like thunderclouds at the horizon, being registered by detector D2 on the other side. The contrast may then be written as

$$Cmax = (Lmax\text{-}Lmin)/(Lmax + Lmin)$$

according to elementary theory. There would ideally be these two light levels only, as long as the house wall is in focus, i.e. the edge is sharp. However the edge becomes more and more blurred if defocusing the instrument, i.e. light intensity will then gradually (depending upon the distance in-between the two detectors) change from Lmax to Lmin when passing a transition zone in-between house and background. The intensity measured by detector D1 will thus decrease from Lmax to L1 while detector D2 is registering a light intensity increase from Lmin to L2. The difference L1-L2 and as a consequence the contrast C = (L1-L2)/(L1+L2) are thus diminishing.

And it's vice versa possible to identify and correct for such image intensity gradients of a picture by means of electronic image processing programs, compressing the transition from a bright to a dark zone, so that the gradient is increasing, the border in-between darkness and light becoming narrower and the image consequently getting sharper.

An image definition and analysis function as described above, should ideally choose that state of focus corresponding to the close house wall of the above-mentioned and much simplified case, thus giving a sharpest possible edge against the dark background. However, a significant further contrast structure of the background would complicate matters, creating another optimal focus within the sub-image segment. A generalised contrast algorithm involving more than two detector elements would then be required. A further development of this method is to replace the above-mentioned step #8 with an alternative and expanded procedure, where image definition and information, registered and measured for each image part and for each state of focus during a focusing cycle, are saved. This would make some final averaging procedure of image information related to several optimal states of focus feasible. The statistical weight of a corresponding major maximum might even be chosen as zero, like for the feasible case of a surveillance camera being directed against a nearby obscuring fence. A new distance discriminatory function would be appropriate for such cases, i.e. a device blocking out image parts with optimal focus closer than a certain proximity distance, like the above-mentioned fence.

Another example: The Instrument may be focused for two optimal states (other focusing distances being blocked out) for every second final image, respectively, being produced.

A typical case would be a nearby thin and partly transparent hedge, through which a remote background is visible.

It's obvious that a comprehensive catalogue of all applications implicated by the present invention, can't be presented here. It's emphasised though that characteristic features of the invention according to the claims enclosed, are of general validity and the exemplary embodiments related shall not limit this scope.

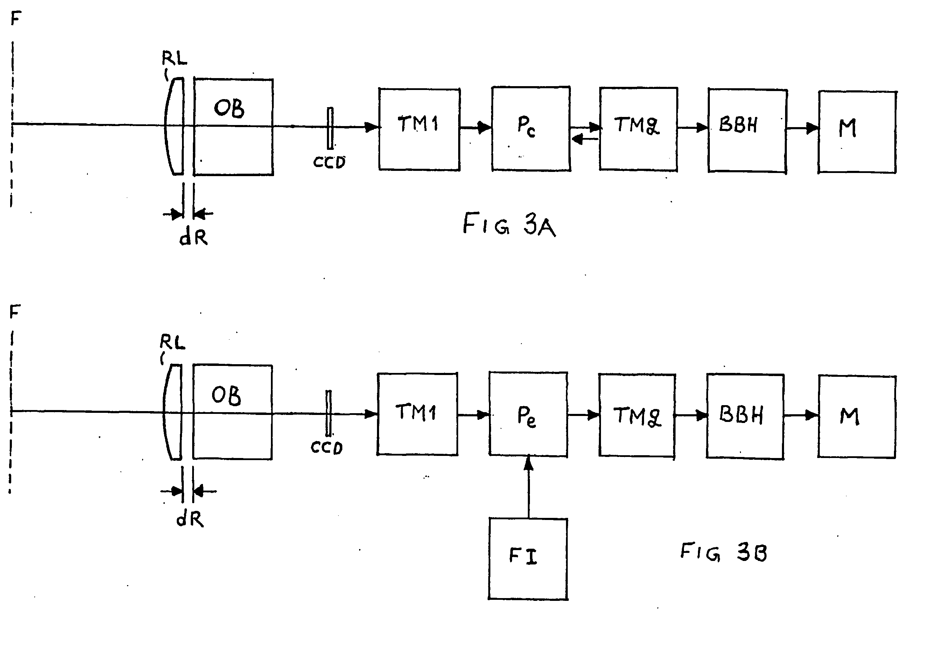

Another and essentially different image definition measurement method is involving actual distance measurements with, for example, a laser range-finder: This is an active method, similar to radar, involving a laser pulse transmitted, then reflected against a target, finally returning to the detector of the laser range-finder receiver. The distance is calculated from the time measured for the pulse to travel forth and back. This procedure must, according to the present invention, be repeated for the individual sub-images and one way to bring this about is to let the transmitting lobe of the laser range-finder scan the image vertically and horizontally, somewhat similar methods for instance being employed already in military guidance systems. The laser range-finder transmitter and receiver can be separate units or integrated with the rest of the optics and structure of the instrument. For example, it would be possible to design an image detector (3), where each little segment (besides registering the image), is incorporating a laser detection function, thus integrating the range-finder receiver with the image recording parts of the optics, related to the present invention. The distance to, and as a result, optimal state of focus for each image part may thus be assessed because focal distances related to pre-determined states of focus are known, in principle. No explicit measurement of image definition is thus required here (cf. Fig 3b). The distance information does nevertheless point out those differently-focused image-parts, which are offering optimal image definition.

The object of bringing forward these techniques, i.e. how to assess optimal states of focus for sub-images within a scene, is to demonstrate the wide-ranging feasibility of the present invention, rather than restricting its scope.

Only part of the image processing required has so far been covered by this text. Further steps may prove essential for a more satisfactory outcome of the operation: It's an important design target that the instrument is capable of producing uniform pictures without visible discontinuities. Choice of sub-image size may turn out crucial, it's for example important to make them small enough in order to secure optimal continuity in-between adjacent sub-images as regards state of focus. On the other hand, sub-images must be made big enough in order to resolve image structures, like contrast variations, with enough precision with reference to the above-mentioned contrast measurements.

Spatial smoothing of adjacent image segments is another wellknown technique, cf for example existing Adobe Photoshop commercial (PC) programs. This procedure may improve image uniformity, however at the same time tending to degrade the contrast of minor image details. Image compression techniques like *jpg may also be incorporated but this is not the proper forum for repeating facts about wellknown techniques.

A novelty though, related to the present invention, is that averaging of image information may be expanded from the 'normal' X/Y image plane to the third in depth dimension Z, involving adjacent states of focus for one and the same image segment, this however requiring adequate storage memory for such running image information.

Another phenomenon to be considered is the variation of picture size in the process of refocusing, like distorsion (differential image magnification). However, an electronic remedy for this is possible, like keeping sub-image sizes unaltered, irrespectively of actual state of focus.

An essential aspect of the invention is thus that the instrument can be appropriately refocused, a subsequent choice in-between different states of focus thereafter taking place.

The *mode operandum* may be static by means of partition into several image planes, but more generally dynamic by following an automatic pre-defined time-sequence schedule, and there is a multitude of different ways to bring this about:

One common method to focus a camera is for instance to move one or several objective lens components, usually at the front, along the optical axis. A single continuous refocus-movement from infinity to - say - the proximity distance of a meter, can be executed in this way. This refocusing process may thus take place continuously rather than in discrete steps which may prove advantageous, at times. However, these mobile lenses must stop at the ends, the motion thereafter becoming reversed, which may prove impractical at high speeds, and where many focusing-cycles per second is an object. The method will nevertheless suffice where refocus-frequency is low, like for certain digital still photo cameras.

Another method would be to introduce one or several glass plates of different thickness, usually in-between exit lens and image plane. Such glass plates are extending the optical pathway, moving the image plane further away from the lens. Several such plates of various thickness, placed on a revolving wheel with its rotation axis differing, albeit in parallel with the optical axis, may be arranged so that each of the plates is, one by one and in fast succession, transmitting the rays within the optical path, as the wheel rotates: This is a very fast, precise and periodic refocusing procedure and it would be possible to rotate a small lightweight low friction wheel with a uniform, yet high speed of at least - say - 1000 turns per minute. This mode would therefore approach TV application speeds more or less, with 25 pictures per second (PAL). Each picture should be registered and processed for the different states of focus i.e. ideally 5x25=125 pictures per second here, with 5 different states of focus (like infinity, 10, 5, 3 and 2 meter focal range). However, a trade off involving rotation speed reduction and several TV frames, associated with one focusing cycle only, seems feasible, though possibly causing side-effects as the differences in-between consecutive TV frames mount up, and for fast moving objects.

The fastest method however, should be to equip the instrument with several differently focused image detectors.

It's for example an established digital video camera technique to use 3 CCD-sensors (like the Sony DCR-TRV900E PAL camera; the purpose in this case being different however, namely to register three main colours (RGB) with different separate sensors). There are several ways to implement this in practice like inserting suitable beamsplitters, usually close to the image plane behind the objective lens. A split into two or several spatially separated images can be arranged by such means and each of these pictures can be registered with for example CCD sensors. Beamsplitters are in common use and may be made of dichroic or metal coated mirrors or prisms in various configurations and with differing spectral and intensity characteristics depending upon requirements for specific applications. The advantage of this procedure with reference to the present invention is that it gives simultaneous access to a sequence of pictures, only differing about state of focus. The comparison procedure may thus be undertaken with pictures having been registered at the same time and all time-lag influence caused by successive refocusing is avoided. The method is apparently only feasible for a few, like three, detectors, i.e. states of focus, which may hamper certain applications.

Refocusing-cycles with many steps of focus may reduce the effective speed of an instrument, or prolong the exposure procedure: Assuming the total time for such a cycle to be = t and the number of steps/frames to be = n, then the effective exposure time, i.e. time available for registering each state of focus, becomes = t/n. A total exposure time, associated with the final image, must therefore (exposure conditions being the same) become n times longer than for the single exposure of a standard still camera of today (i.e. this invention not being applied). The consequences may well be negligible though, or comparable to those time-lags introduced already by autofocus and flashlight functions. Fast objects may move a little in-between successive exposures but still, motion blur is essentially originating from single frames, because only one state of focus is relevant for focusing upon the majority of objects.

Three modes of focusing have been described so far. They are representative but there are many other ways to bring it about, exemplified in brief as follows:

The detector may be focused by axial translations, being small most of the time like tenths of a millimetre, but still an oscillation forth and back which may be impractical for fast sequences, at times. A most interesting concept would be a three-dimensional detector with capacity to detect several differently-focused 'in depth' surfaces at the same time. Thus no mechanical movements nor beam splitters necessary here whatsoever, though the costs may be of some consequence.

The above-mentioned wheel can be replaced by some rotating optical wedge giving continuous refocusing but introducing optical aberrations at the same time: It may be acceptable though, or at least possible to correct.

A multiplicity of technical solutions aiming at refocusing procedures necessitated by the invention are thus available. The principles of the invention are of course not restricted by these particular examples.

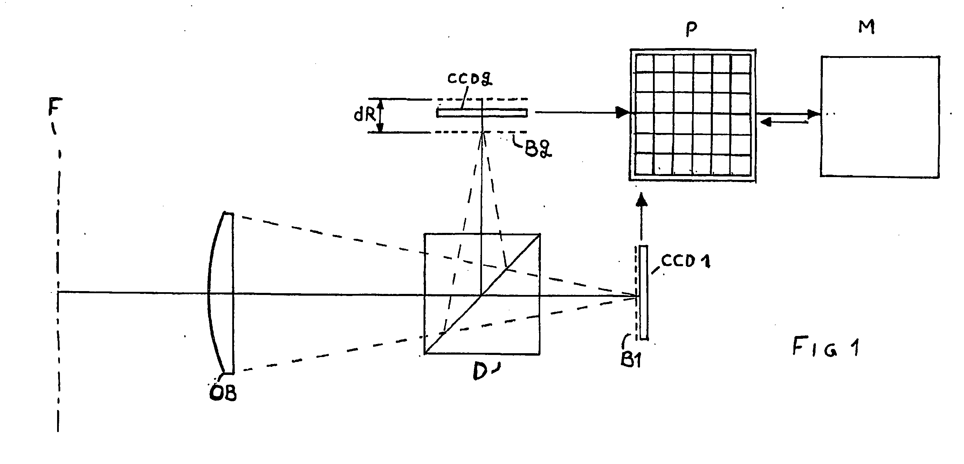

A particularly simple application example (Fig 1) of the present invention, shall now be described, where memory capacity requirements and mechanical movements are minimal. The objective lens is projecting an image of the field of view F on two image planes B1 and B2. This split is done by a beamsplitter D, dividing the wave front into two different parts with equal intensity. The image plane B1 is here stationary and the image is detected by the CCD-sensor CCD1 while the mobile image plane B2, corresponding to various states of focus, can be detected with another sensor CCD2, which is subject to axial movements. This adjustment = dR may be effected by turning a knob on the outside of the camera, corresponding to refocusing the instrument from infinity to - say - the proximity distance of a meter. The two detectors are connected to an electronic processing unit P, with the following functions:

1. Images B1 and B2 are subdivided into small image parts B1 and B2i by electronic means.
2. Image sharpness for each image couple B1 i respectively B2i is calculated
3. These sharpness values are compared, i.e. for each couple.
4. Subimage information associated with that image part (from a couple) having superior image definition, is forwarded to image memory M (Information from the other image part being rejected)

This procedure is repeated, over and over again, for all sub-image couples B1i/B2i, B1i+1/B2i+1... until a resultant final image has been saved in image memory M, which could be a so called memory-card, detachable from the camera after finishing photography: Such cards are nowadays widespread for digital still camera use. Some further image processing like *.jpg compression, distortion correction and edge smoothing in-between adjacent image segments or subimages (cf. above) may also take place in a more realistic scenario, where additional memory capacity may prove advantageous or even necessary (cf. Fig 1) for intermediate storage of image information while the process is going on in the processing unit P, cf. Fig 3. Image elements from two different states of focus only, are thus contributing to this particular final image, however the associated depth-of-field improvement is still significant: Suppose the focal length of an objective camera lens OB is around 12 millimetres, other parameters like F-number and ambient light condition being reasonably set. The depth of field could then well be from infinity down to something like 5 meters for sensor CCD1 where the focal distance is - say - 10 meters. Let's furthermore suppose that the second CCD2 sensor- focus is set at 3 meters, creating a depth of field from - say - 5 meters down to 2 meters. The total, using both detectors, would then be to create an accumulated depth of field in-between infinity and 2 meters, as manifested on merged and final images, viz. after having applied the methods of the present invention. This is of course much closer than five meters, however it's only one of numerous hypothetical examples.

A stunningly fast development of digital still camera performance is presently taking place, which will thenceforth accentuate focusing and depth-of-field issues. The Olympus-camera CAMEDIA E-10 with 4 million image pixels and a flexible image processing may represent a 'State of the Art' (A.D. 2000).

It's also possible to move the image process, associated with the present invention, to a separate computer (PC) station. The processing of differently-focused image sequences from one and the same scene, moreover registered with some standard camera without processing refinements prompted by this invention, may take place there. No electrooptical instrument, like a digital camera, is necessarily required for this mode of operation. A traditional emulsion-film camera will do, image digitising possibly taking place in a scanner, after the film has been developed, subsequently forwarding the frames to the computer. This may for instance be done in the processing laboratory engaged, ensuring that depth-of-field-enhanced photos are delivered to customers, who don't even have to think about it! Basic principles of the invention remain the same nevertheless, i.e. frames must still be converted for a digital/ electronic medium in order to have them processed. However two main ingredients of the invention, i.e. a focusing scan followed by some digital processing, are here separated, the latter taking place independently and somewhere outside the camera proper. Instruments associated with the present invention, are thereby physically generalised, now involving more than one locality like (in this specific case) a still camera and a PC computer with requisite program software.

As a contrast, the already described stationary video surveillance camera provides a more complex system and what is more, may incorporate image intensifiers (i.e. nightvision capacity) and telephoto lenses. Crucial lack of light and poor depth of field in association with large apertures (small F-number) and long focal lengths, may here arise. It's possible to increase the memory capacity of the system, enabling storage of image information and focusing data from frames belonging to several focusing cycles. Processing and selection of image information may then be more independent of focusing cycles, allowing introduction of delay and a certain time-lag in the system before the processed images are presented on an image screen or are saved on magnetic tape or DVD disk. Image processing may even take place much later in another context and somewhere else, using for instance magnetic tapes with primary information available. This is similar to the still camera example (above) where the basic function was split into two or several spatially separated units:

The Image registration involving refocusing cycles is thus accomplished by a surveillance camera *in situ* while the image process may take place miles away in a computer. This procedure allows the use of more powerful computers, a possible advantage where huge volumes of information are to be handled.

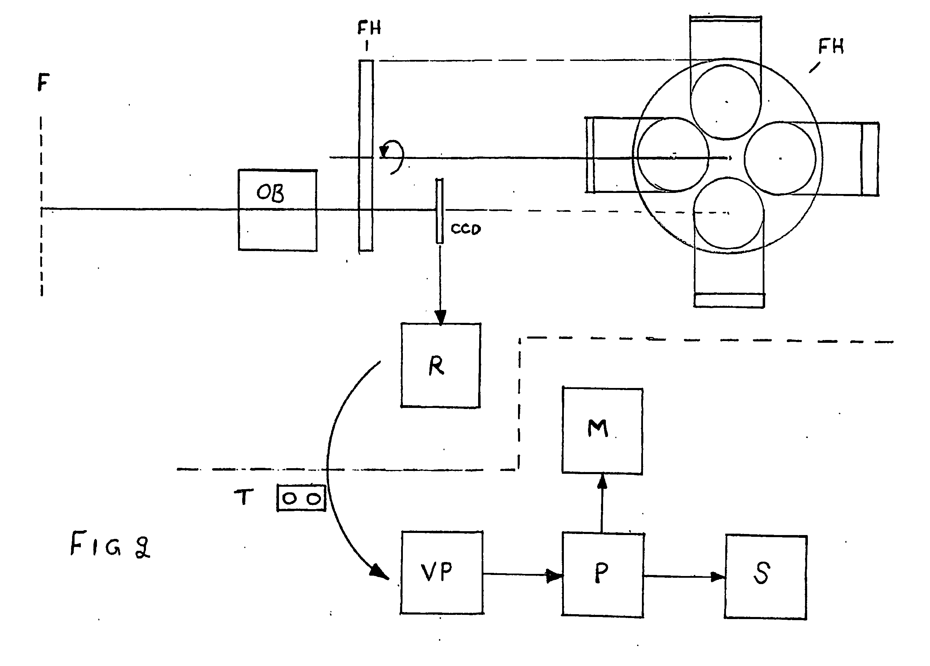

This application shall now be described in more detail (Fig2): The surveillance camera is installed at locality A, where the scene F is projected by objective lens OB onto an image plane where a CCD-sensor belonging to a video camera is detecting the image. A focusing-fluctuation in-between four different states, is executed with the focus-wheel FH incorporating four flat glass plates of different thickness: It's a fast revolving wheel giving four different focuses per turn. Video frames are registered on the magnetic tape/video cassette T at recording-station R. This video tape T is then transported to another locality B somewhere else, where the tape T is again played on another video machine VP forwarding image information to a processing unit P, which is selecting that better-defined image information in focus, already described (above). The processor P is therefore, in this specific case, selecting information in focus from image groups of four. The processed video film is finally stored in memory M or presented on image screen S. A more qualified use, under poor light conditions in particular, may involve the record and presentation of raw unprocessed images as well as depth-of-field-enhanced images, following the principles of the present invention. Optimal focusing data may moreover be stored for respective image-parts, thus avoiding to make contrast measurements all the time, this being particularly expedient when such measurements tend to be ineffective or even impracticable to undertake, like whenever light conditions are poor. Other functions belonging to this kind of somewhat sophisticated systems, may include an option to vary the number of subimages employed or the number of differently focused frames during a cycle, the object being to reach optimality for various ambient conditions.

Certain aspects of the present invention are further illuminated and exemplified in Fig 3a as follows: A view F is projected by objective lens OB onto a CCD sensor. This lens OB has a mobile lens component RL, adjustable (dR) along the optical axis, equivalent to refocusing from infinity down to close range. The lens RL is moving forth and back in-between these end stops, passing certain focusing positions where exposure of pictures take place in the process. Image information from such an exposure is registered by the sensor, then forwarded to a temporary image memory TM1. The processing unit Pc is capable of addressing different sub-images and to receive selective sub-image information from TM1 and similarly from the other temporary memory TM2, the latter containing optimal image information, previously selected during the focusing cycle going on. Image contrasts are calculated and then compared for the two states and that alternative giving highest contrast is kept in memory TM2. Even more information may be saved in memories like TM3 (not shown), speeding up the procedure further whenever, as a consequence, certain calculations (of contrast for example), do not have to be repeated over and over again. Further image processing, where the object is to improve upon image quality and possibly compress the image, will then take place in unit BBH and the resultant image is ending up in final memory M.

The situation in Fig 3b is similar except for one important thing: The processing unit Pe is no longer calculating image resolution nor contrast. Instead the processor gets its relevant information about optimal states of focus for different sub-images from other sources, i.e. memory unit FI. This information may originally come from a laser rangefinder or be range information earlier assessed from a stationary installation (cf. above). Such information suffice for the processing unit Pe when selecting image information for each state of focus, giving sharpest possible image. This select information is finally transferred to the temporary memory TM2, the rest of the procedure following Fig 3a (above). Various possible set-ups and applications related to the present invention and its depth-of-field improvement functions have now been proposed. It would be possible to describe numerous other such explicit versions having the following features in common:

1. It's an electrooptical instrument, in the sense that original pictures are projected by an optical device while electronic digitising and image processing associated, is taking take place in the same physical compartment or somewhere else.
2. This same electrooptical instrument, i.e. described by claims and text associated with the present invention, can distinguish and detect individual sub-images or segments of a whole image.
3. The image may be refocused in various suitable time-sequences. Or as an alternative, the instrument is capable to register more than one differently-focused image simultaneously.
4. The instrument may select that state of focus corresponding to a certain set of (similar) sub-images, giving optimal image definition.
5. Image information from the most optimally focused frames, belonging to individual sub-image sets, is added to a final compound image being effectively assembled from differently-focused image parts more or less.
6. The resultant image is saved in an appropriate final memory and/or is presented on an image screen or similar.

**Image processing**

The image information required is, according to the present invention, extracted and assembled from original exposures, depicting the same scene, but with different settings. The object is to produce an improved final image of select image information and this can be achieved in several different ways, described as follows and commencing with methods related to improvements of depth of field.

1. Average-methods

The mode of superposing differently-focused images is conceptually simple. It may be accomplished as follows:

1. Optically in an objective lens system or a binocular, by means of dividing the aperture in portions of different refractive power (cf. American Patent 4,741,605 by Alfredson et al)
2. By means of a wave-front division in part reflective mirrors, thus generating at least two ray paths, which are spatially separated and differently-focused, however finally reunited into a composite image, made up from differently-focused contributions.
3. By refocusing an objective lens, belonging to an instrument for image registration, this being so quickly executed, that several states of focus occur during the exposure time.
4. Periodic refocusing, faster than the physiological reaction time for the eye (around 1/10 of a second) in visual instruments like optical viewfinders or telescopes, so that the observer is unable to perceive individual images, this being rather much like watching a movie.
5. By double exposure of a 'classic' emulsion-film camera and
6. Electronically by means of some superposition or pixel by pixel summation of differently-focused electronic images.

The feature in common for these average-methods is some summation of all available image information, thus including the out of focus 'contributions' as well, however thereby degrading image contrast and quality in the process. Such images are here denominated 'average images' (M), with the corresponding 'average-method' for short. (Reference: Program software for PC computers for the purpose of superposing electronic images exist, cf. 'Image Fusion Toolbox' for 'matlab 5.x.', presently freely downloaded from Internet address www.rockinger.purespace.de/toolbox_r.htm; Cf. also reference to a 'linear superposition' average-method corresponding to #6 above, on the web address of the same Oliver Rockinger, and his thesis 'Multiresolution-Verfahren zur Fusion dynamischer Bildfolgen', Technische Universität Berlin 1999, for a more general account of image fusion methods.

The digital camera 'Finepix S1Pro', produced by Fuji Photo Film Co Ltd in Tokyo Japan, allows superposition of sequentially exposed images).

2. Contrast-enhanced average methods

A further developed and improved method, related to electronically registered images, is involving an additional procedure of subtracting or removing the above-mentioned 'out of focus image information'. The result may generally be described as a concentration of 'focused image information' in the final picture or in other words, out of focus-image information is discarded. This process may be more or less efficient, depending upon model approximations. A version denominated 'contrast-enhanced average method' will be exemplified as follows:

The above-mentioned average image (M) is defocused, its intensity thereafter being reduced by a suitable factor and this picture finally being subtracted from the compound average image (M). This last procedure implies a *de facto* reduction of noise from the average image (M), this being the purpose. The above-mentioned defocusing may be performed electronically, such 'blur-functions' generally exist in commercially available image processing programs (like the 'Photoshop' PC programs from Adobe Systems Inc, USA). A 2-image process may thus symbolically, and in a very simplified way, be written as follows: The proximity-focused image A consists of portions which are focused A(f) or unfocused A(b). The remotely-focused image B is similarly consisting of focused B(f) or unfocused B(b) parts:

$$A = A(f) + A(b) \qquad\qquad (1a)$$

$$B = B(f) + B(b) \qquad\qquad (1b)$$

The average picture M is now created.:

$$M = A + B = A(f) + A(b) + B(f) + B(b) \qquad\qquad (2)$$

The defocused average image M(b) is next created:

$$M(b) = A(f)(b) + A(b)(b) + B(f)(b) + B(b)(b) \qquad\qquad (3)$$

where (b) represents defocusing/blur and (f) stands for focusing in accordance with what was written above. The following relationship applies more or less like a definition, to the transition from the state of optimal focus to a state of blur

$$A(f)(b) = A(b) \qquad\qquad (4a)$$

$$B(f)(b) = B(b) \qquad\qquad (4b)$$

The assumption that image information defocused twice is yielding the same result as if defocused once only, is an approximation. However we are nevertheless writing:

$$A(b)(b) = A(b) \qquad\qquad (5a)$$

$$B(b)(b) = B(b) \qquad\qquad (5b)$$

(4) and (5) are now substituted into (3), giving

$$M(b) = 2A(b) + 2B(b) \qquad\qquad (6)$$

and the intensity of this image (6) is finally halved and subtracted from the average picture (2), giving us the resultant picture R:

$$R = A(f) + A(b) + B(f) + B(b) - M(b)/2 = A(f) + B(f) \qquad (7)$$

This final image (7) may now be compared to the average picture (2) above: The unfocused image information A(b) and B(b), from original pictures, has apparently disappeared, while the focused image information is retained. Or in other words: Using this method, the image contrast has been enhanced by rejecting image-components which are out of focus, the in-focus information being retained however. As already mentioned, these relationships reflect an approximate model for defocusing: Picture regions are rarely completely in focus or out of focus, rather something in-between. The discussion is nevertheless indicating a distinct possibility to cut down unfocused image components, from average images. These further processed images are henceforth called 'contrast-improved average images'. The discussion (above) involves only two differently-focused images, however the discussion is valid for any number of pictures, not shown here due to triviality.

These methods producing contrast-enhanced average pictures may be used for viewfinder applications, when making template pictures (described elsewhere in this text), for certain video camera- and such still photo camera applications, where the resultant image is deemed 'good enough' for its purpose, this latter property not always being the case however.

3. Filter methods

According to another method developed, each of the original pictures is filtered by means of laplacian or fourier operators (Cf. also the so called Burt pyramid, American Patent 5,325,449 to Burt et al., American Patents 4,661,986 to Adelson and 6,201,899 or WO 00/22566 to Bergen), whereby a series of transform pictures are created. This filtering is executed row by row (filtering of video- and related signals), as far as these descriptions can be interpreted. Transform images do generally consist of image series (like L0, L1, L2, L3...Li), containing, so to speak, all available image information as a whole, but where usually each individual transform image (like L0) is holding only part of the total information. The character of these transform images is entirely different from the original pictures and may therefore not be merged into a final image with improved depth of field. However their intensity distributions may nevertheless reveal such parts of a picture, which are more in focus or (more appropriately expressed as far as lower order analysis goes), where the largest concentration of outlines or edges in focus are located. It's possible to map the high-intensity distribution of a transform image (thus higher contents of focused image information), called sub-regions. Intensity distributions of such sub-regions on filtered images, up to a certain order (however usually restricted to lowest order(s), because of practical reasons) are compared, enabling a selection of the corresponding regions - from the differently-focused, original pictures. Sub-regions of higher intensity, from the differently-focused and filtered images are thus identified by using this technique, and the identification serves (as far as filtered-image intensity and superior focus correspond to each other) the purpose of pointing out the associated sub-regions on original exposures, for a final image synthesis, with depth-of-field improvements. This method may require respectable computing capacity, in case all transform images up to a certain order (i) are to be processed. There are 4 times more pictures to pro-process with the transform pictures L0, L 1, L2 and L3 than if only a single picture L0 is to be used. This is a reason why the laplace filtering process is so often restricted to lower order analysis only, consequently (as far as the selection process goes) only utilising a limited part of the total image information, from original photos. It's previously known that laplace-filtering, of this kind, is suitable for identification and reproduction of edges and patterns, a frequently desirable property when working with microscopes.

4. Segmental methods

Original pictures are electronically subdivided into sub-images or segments according to an aspect of the present invention. These preselected portions of the image are analysed as regards image resolution or other parameters. A choice of those image parts or segments having superior image definition, from respective original images, may thereafter take place. These select segments are merged into a final image. The name 'segmental method' will apply here to this technique. It differs conspicuously from other techniques in that the segments are distributed all over the original pictures, before the main image processing starts. There is furthermore no need for filtering of original pictures and finally, as a result, the total image information is utilised when choosing the segments. These segments (i.e. sub-images) are also the same or similar and evenly distributed over the picture areas, according to a preferred mode of operation.

This method is therefore particularly suitable for the art of photography, where depth-of-field- improvements are aimed at, where a primary object of the photographer is to reproduce a scene as faithfully as possible. On the other hand, the purpose is not to enhance/extract certain details, like edges, contours or patterns. Similarities rather than structures or patterns are therefore searched for in a preferred mode of operation, see below. It may furthermore be pointed out that segmental methods are also distinctly applicable to other selection criteria than image resolution.

It may prove advantageous, during ongoing image processing, to change shape, size, position, or combinations of these, for at least some of the segments subdivided, cf. also part #5 below for one of several possibilities, plus some relevant comments in part #10.

To sum up, the original pictures are divided into sub-images (segments), which are compared and a subsequent selection from these image parts is then performed, according to applicable claims and descriptions of the present invention. These segments, selected from original images recorded, are merged into a resultant image with better depth-of-field properties than each individual and original picture by itself. This can be done in many different ways, a representative selection of them appearing below:

4a. Contrast methods

This previously known technique is utilised when adjusting for some advantageous focal distance, when taking single photos. The measurement may then be performed within a few picture areas, providing some further optimisation. (For further references, see the periodical FOTO #1 1978 and American Patents 4,078,171 or 4,078,172). Segments with highest available image definition may be identified, using this contrast measurement technique: The image contrast is generally increasing, as the image resolution improves. The contrasts of different sub-images are thus measured and compared. Those sub-images showing higher contrast and therefore - in general - have higher image resolution, are selected. All such segments, i.e. qualified according to this criterion, are thus selected to be part of the depth-of-field-improved final picture. This is consequently one of several selection methods, however already dealt with in this text, and since this measurement technique is already documented in other patents, it is not repeated here. Subheading here, for this segmental method, is the 'contrast method'.

4b. The template method.

The Template method' is a name coined for another comparative segmental technique, with the following characteristics: A differently produced, depth-of-field improved photo (template), is first created for the purpose of comparison. This 'other' technique might be some averaging method, possibly contrast-enhanced, or any other segmental technique like the above-mentioned contrast method, and there are still many other ways to bring it about. The important thing is not how the template picture was produced, but rather that it's adequate for a comparative procedure *viz.* towards the original photo recordings. The template picture is - again - subdivided into sub-images, same as for the original exposures. Corresponding original picture sub-images are now compared with associated sub-images from the template picture and that original sub-image showing greatest similarity with the 'same' template sub-image, is selected for the final assembly of a resultant and depth-of field-improved picture. The 'similarity' can be estimated/calculated in many different ways. However, some kind of comparative score is generally set up, involving pixel values from original photo sub-images, compared to corresponding pixel values from the template: For example by using a suitable algorithm, subtracting corresponding pixel values of an original photo and the template from each other, thereafter calculating some power for these figures, finally adding or averaging these contributions to some kind of score for the whole segment. There is thus more similarity, when the accumulated difference (score) attains a low value. The present invention is of course not restricted to these particular examples. Distinctive features of the template method, as compared to other methods, may be summarised here:

1. A field of depth-improved template picture is produced by other means, for the purpose of comparison.
2. Original photo-segments are not compared to each other but are compared to segments from the template picture instead.
3. Greatest similarity in-between picture parts from the original and template photos are identified by means of comparison.
4. The Template method does not identify any segments with maximum contrast nor image definition as such.

There is of course no requirement for the template picture to qualify as a final result - this would in fact make the comparative template method superfluous. However the template pictures must nevertheless have such qualities that the comparisons with original exposures indicate the correct sub-image choices.

## 5. Segmental variation methods

Problems in common for the above-mentioned segmental methods include failure due to low contrast or picture areas lacking (sufficient) detail. Edges and picture-contours may furthermore cause disturbances (artifacts), particularly along focus-edges while similar disturbances may appear along sub-image borders. The selection methods are statistically more reliable when many image points (pixels) are involved within a particular sub-image. On the other hand, the selection process around focus-edges (i.e. edges which separate picture areas of differing states of focus) lacks precision when using large segments, due to the fact that such segments may land upon a focus-edge and as a result the segment selection is, in such cases, bound to be in error for part of the segment, i.e. generally a more severe error for the larger image parts. The segmental variation method, is here the name coined for a general technique, where the object is to reduce such defects. Its characteristics are as follows: Pixel-contents of the segments are changed by means of modifying their size, shape and position, thereby generating new (statistical) basic data for the segmental methods just described. One preferred mode is to change size of rectangular segments (like 2x2; 4x4; 8x8....nxn pixels). Vertical and horizontal translations of one or several pixel intervals or rows, of a whole predefined segment web, is another mode of preference, creating a sequence of differently positioned but otherwise similar segment patterns. Some of the pixels, from each segment, will be replaced by other pixels from adjacent segments when performing these 'steps'. However only a limited number of such web translations are possible, without trivial repetition. For example: An ideal image without external boundaries is subdivided into segment squares (like; 2x2; 3x3; 4x4 or ....nxn pixels), where the number of possible patterns N, without repetition of segment-contents, may be given as:

$$N = n \times n \qquad\qquad (8)$$

The number of unique 'different' sub-image web positions is thus 4x4 = 16, with the segment-squares sized 4x4 pixels, however all these permutations are not necessarily required for an image process. The selection procedure, according to any of the above-mentioned segmental techniques, may now be repeated as a whole for each of these web positions and, as a result, several versions of a processed, resultant image are created despite the fact that the same original exposures were the basis. For example, a pixel by pixel average from these resultant images may now be calculated, giving us the final image result, thus no longer founded upon a single 'decision' but rather upon a multitude of'decisions', based on the more balanced and complete 'statistics', created by the different segment patterns. This averaging does not affect, alter nor modify image regions with a stable and unambiguous state of focus, corresponding to one original image only. And this is because the averaging process takes place after the selection procedure. On the other hand, only those image regions where the 'choice' in-between different original images is unstable, because of various reasons, such as vicinity to focus-edges, are influenced; Or in other words: Wherever a change of segment size and position may influence the segment choice, this however not being the most general case. Averages from these ambivalent special cases reflect the uncertainty. This segmental variation technique does furthermore cause boundaries in-between adjacent segments/sub-images to change place. As a result, possible disturbances, discontinuities and other imperfections abate as the sub-images are moved around and averaged. A disadvantage of the segmental variation technique might be its time consuming properties, due to repetition of the selection process.

## 6. Edge methods

In-focus structures or sharp edges on a picture can be detected by visual inspection or by means of filtering (see below). These edges, separating image portions of different Intensity, may or may not outline image portions being in a similar state of focus on a particular picture, however divide said picture into sub-image areas of different sizes and irregular shapes, following the *ad hoc* natural outlines of some objects happening to be within the particular field of view corresponding to a picture. This sub-division, following sharp edges detected, is thus individual for each picture and furthermore different for respective differently-focused records of same scene; The sub-image partitions created are thus correspondingly variable to the same degree. This mode of sub-dividing an image is thus the result of an initial edge detection and is neither geometric (i.e constituting a regular pattern based upon the simple shapes of geometry), nor similarly executed on respective differently focused images involved, but may nevertheless be potentially useful when selecting image parts of optimal image definition from a set of images, with the view to merge them into a final picture with improved depth of field.

Patent WO-97/25690 (Olsson) discloses a method associated with this approach, however entirely differing from the geometric subdivisions without edge detection, which characterize the invention of this application.

Image edges or contours are of at least two different kinds: Those caused by contrasts, i.e. strong intensity gradients (named 'contrast-edges' here) and those created by a boundary in-between image regions in different states of focus (named 'focus-edges' here). An edge may well be of both kinds, at the same time. As already mentioned, an ambivalent situation occurs whenever a segment falls upon a focus-edge. A way to avoid this is to find first those edges (for example with a laplacian analysis, already described) and then modify the sub-image division accordingly, wherever the sub-images happen to fall on such edges: For example by a further subdivision of the segments involved, into smaller sizes or by adjustment to more flexible shapes, so that these segments are distributed on either side of the edge, more or less. As a result, segment areas being influenced by focal edges, are reduced. It's sometimes possible to let sub-images follow the shape of an edge.

A Nearby focus-edges may, if being out of focus, obscure a background in focus, thus reducing image contrast along the focus-edge borders. This is essentially a perspective effect, as seen from the entrance aperture. The effect may be reduced by decreasing aperture, thereby reducing the width of this edge zone.

Another remedy is to introduce a certain (relative) amount of electronic or optical magnification for proximity-focused images, so that focus-edges of foreground objects expand and, as a result, cover those zones with reduced contrast, more or less.

7. Segmental Exposure Control (SEC)

Another member of the image improvement technique group, utilising segments, here under the name 'segmental exposure control', shall now be described: A subdivision of original images into parts, is presupposed even with this method. The purpose, according to another aspect of the present invention, is to improve the selection procedure for those picture areas, which would otherwise be over- or underexposed. The object is to control the exposures individually, i.e. for different segments, thus avoiding under- or overexposures and ensuring registration of more detail within the different sub-images. As a result, selection-methods with reference to depth of field, are improved. It's a known fact that over- and underexposures of image-registering instruments (like film cameras, digital still photo and video cameras, image intensifier devices and infrared instruments), occur because the detectors (like CCD sensors, film emulsions or image cathodes), electronics (like A/D converters) and presentation media (like image screens and photographic paper) can only detect, process respectively present a limited range of intensity 'levels' (cf. bandwidth) of incident light, through the optical entrance aperture. Or in other words, the front optics of an instrument may well project almost equally good images, regardless of high or low light level, while detectors, electronic processors and presentation media are more restricted in this respect, suffering from reduced capacity to represent the total light intensity span or interval. The initial detection is of particular significance in that respect, because information being lost here will irretrievably disappear even for the subsequent electronic process.

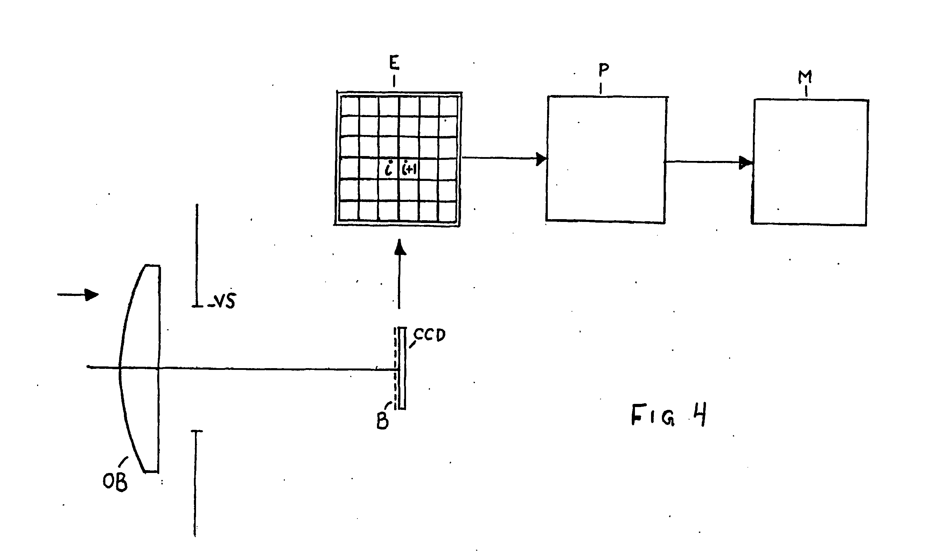

However, an optimal exposure for each little part of the whole image may be achieved by means of individually controlling each part of the scene, i.e. by a differentiated variation of exposed amounts of light. As a result, each little part will be registered under a more favourable average intensity-level for the current sensor. The method is illustrated by Fig 4.

Exposure control, according to this other aspect of the present invention, does here, by definition, include a differentiated control of light quantities exposed as well as spectral properties (white- balance), the latter quality also being subject to differentiated adjustments during detection or image processing, so that locally conditioned and troublesome tint aberrations within for example sky regions or shadow areas are reduced or eliminated.

The varied and for some image areas mixed lighting of light-sources with differing spectral character, like the sun or sky, incandescent or fluorescent lamps or flashlights may even create differing local states of white balance on one and the same photo. The remedy is however a correction, using this 'local' technique. This procedure, of 'segmental exposure control' is exemplified as follows:

1. As a first step, the local average light intensity for each little picture part or segment, is measured by means of a sensor belonging to the instrument.
2. The scene is exposed in such a way that each segment or individual picture part is exposed/illuminated in the most optimal way.
3. Image processing, including possible depth-of-field-improvements according to the invention (cf. above), takes place.
4. The differentiated image intensities are restored more or less, i.e. original (cf. step #1) average light intensities are recovered or, if applicable, are adjusted for presentation media.

This last step #4 may involve a trade-off, namely a compression of the restoration in such a way that intensity-variations involved may fit within some constrained interval or 'bandwidth' of the presentation- or memory media available, so that image detail associated with exposure extremes are not lost. This response may aim at a logarithmic or asymptotic behaviour, similar in character and function to an eye or emulsion-film.

The method of segmental exposure control was created in order to improve on the segmental selection process, where saturation situations occur when registering segments. In other words, where segments would otherwise be over- or underexposed to such a degree that image detail and contrast, projected by the entrance optics, is lost. Cloud formations of a bright sky may for instance 'fade away', or foliage inside a deep shadow may be 'absorbed' by darkness in the process of image registration.

Finally a discussion in more detail about how this selective exposure (cf. step #2 above) control may be arranged: Assuming (though the present invention not restricted to) a so called digital camera exposing more than one frame (like 2) of the same scene. First a standard exposure of - say - 1/100 second, such as a 'normal' automatic exposure control would dictate (old technique). Secondly a (comparatively) much underexposed picture with - say - 1/400 second exposure time. We note that an extra 1/400 sec. exposure does not here significantly introduce extra motion blur as compared to the 'normal' 1/100 sec exposure. The execution may furthermore, in favourable cases, take place in fast succession, because no mobile components need be involved. The other parameters like focusing, aperture stop, focal length etc are here remaining the same, for the two exposures. The point is that (otherwise) overexposed picture areas (like bright sky of a landscape scenery) are more appropriately exposed by means of the shorter exposure. The electronic camera processor may, after image registration, select such segments from either image, that are most optimal as regards exposure. And, because the sky is now retaining more detail on the frame subject to shorter exposure time, we may also expect the final picture to become more detailed. And as a consequence, it may be more reliably processed as far as depth-of-field-improving decision methods of the present invention are concerned. This differential exposure method using sub-images may continue to function and yield enhanced image quality, related to the same exposure-control improvements, even when the instrument/camera is restricted to register pictures, of one focal state only, i.e. whenever the depth-of-field-improvement function, according to an aspect of the present invention, has been 'switched off. And thus at last, as a spin-off from this discussion: It's evidently possible to apply this SEC image improvement technique to other independent contexts, i.e. even where instruments/cameras are lacking these depth-of-field-improvement facilities altogether.

The method does of course allow more than 2 differently-exposed frames to be used, however practical limitations are there, as far as total exposure time is concerned and too many sequential and/or long exposure times may cause unacceptable motion blur at the end of the process. The method does also require more memory and calculation capacity, because more pictures must be processed as compared to 'classic' photography, according to present day technique and this does particularly apply to the combination with depth-of-field-enhancement imaging techniques already discussed. However the performance of electronic processors and memories are presently undergoing a fast development which will presumably favour the present invention.

Related and already available technique, where the object is to achieve better exposure control when taking a photo, include various kinds of optical filters (like for enhancement of cloud formations), camera settings for different types of scenes (snow-scapes, taking photos against the light etc) and the so called exposure bracketing methods, where several differently-exposed photos are taken, in order to facilitate identification and choice of a preferable exposure. They all have in common that one state of exposure only is 'allowed' for each single photo. The segmental exposure control method on the other hand, as proposed here, involves several different states of exposure within one and the same final image-frame.

Existence of image sensors, with the specific property of allowing local variation of exposure time, provides us with one more technique for applying the differentiated exposure technique: This is where exposure time may be chosen *in situ* on the sensor, already during the process of detection. A sensor with differentially variable sensitivity (the equivalence of light sensitivity for photo emulsion-films) provides a similar mode. Another technique is to execute several exposures, using same exposure time, subsequently followed by some controllable addition of 'contributions' (pixel by pixel and/or for each segment) until an optimal 'add-on' average intensity has been reached, for each individual segment. There is finally one more way to control the amount of light exposed, i.e. by means of changing the relative aperture of the projecting lens: Several different exposures, with same exposure time but different F-number, may now take place. They are executed with different aperture settings though, for instance during the process of one single and continuous aperture reduction. Several differently-exposed picture parts or segments are thereby registered and optimally exposed segments may be selected as before, according to the principles already disclosed about the segmental exposure control technique.

All these applications may well show variations of practical interest, they are nevertheless all embracing the same basic principles which characterise this method of differentiated exposure control, i.e. different image areas or segments, of which the whole picture is built up, are subject to individual exposure.

8. Flash Photography

The depth-of-field improvement technique, according to the present invention, does also call for a more optimal exposure control when illuminating a scene by artificial means. It's a wellknown fact that flashlight, being used in photography, may severely flood the scene, 'eroding' the picture of foreground objects, still leaving the background utterly unilluminated, with a pitch dark appearance. This is due to the fact that light intensity is quickly fading when receding from a light source. The exposure time is, according to current wellknown technique, constituting an average of a sort, a compromise where certain objects of intermediate distance may be acceptably exposed while nearby objects become much overexposed and the background underexposed. The technique of exposure control, using segments, (cf. previous part #7) proves useful even for flash photography in combination with the depth-of-field-improving methods discussed. It's now possible, thanks to the differential exposure control, to choose in-between several differently exposed frames, for each state of focus (there being several or one only of the latter). For instance the following two exposures: First a 1/400 sec exposure, followed by a 1/100 sec standard one. At least part of the very foreground is 'better' reproduced by the first (1/400 sec) 'shot' while the second 'normal' one would give optimal exposure more or less, for intermediate distances. A state of focus corresponds to a particular focal distance, indicating an obvious possibility to link these two entities with a formula. And, assuming some pre-programmed knowledge about how the (flash) light intensity is diminishing vs. range, we may let the camera calculate and decide about which one, of several differently-exposed frames, is most optimal for a certain focal distance. The following method with differently-focused exposures (associated with certain distances, cf. above) and variable illumination, is applicable for the most common pre-determined cases, where states of focus are known before exposure, and where the illumination of a scene is essentially artificial by means of flashlight or some other controllable floodlight or similar device on top, or in the vicinity of, the camera. It's furthermore known how light intensity is fading with increasing focal distance, thus enabling calculation of the most optimal average illumination levels, associated with respective states of focus. The illumination device may for example be designed so that the amount of light can be varied by electronic signals or other means via the camera/instrument, in such a way that the nearby-focused frames are exposed under less amounts of light, while the most distantly-focused images are exposed with more or sometimes all available light, depending upon the actual focal distances. Optimal flash intensities and/or exposure times, are thus set by actual object distances, which in turn are occasioned by pre-determined states of focus. Direct relationships in-between states of focus and optimal illumination levels are thus established. The individual exposure control was here applied to each differently-focused image frame as a whole, while the object was to lose less image detail due to unsuitable exposure. As a final result, the depth-of field improvement techniques, where segment selection procedures apply, benefit from this technique.

9. Depth-of-field reduction methods

The opposite effect to a depth-of-field improvement, i.e. a depth-of-field reduction, may prove useful, wherever the purpose is to enhance certain objects of the scene and where it is advantageous to suppress some annoying fore- or background, as may be the case in certain contexts. This process, aiming oppositely as compared to the before-mentioned depth-of-field improvements, is nevertheless following same principles more or less, as evidenced by the following example:

    1. A 'priority-image' (j) is chosen by the operator. Objects being in focus, on this particular image, are to be enhanced.
    2. An initial segment-selection procedure, following part #4 (above) will now take place. Optimally focused sub-images will thus be selected from the differently focused images.
    3. Those of the select segments and furthermore belonging to (j) the priority-image only, are forwarded to a memory.
    4a. A selection procedure 'in reverse' is next performed with all the other segments: The most unfocused/blurred segments are thus selected and forwarded to memory. Or:
    4b. A pixel by pixel summation- or some other kind of compound picture is made from the rest of the segments, optionally being subject to further blur by electronic means, finally forwarded to a memory.
    5. A resultant image (R) is assembled from the optimally focused segments, belonging to priority image (j), according to step #3, plus the blurred segment contributions from #4a/b.

Steps #4a/b may be varied and combined in different ways. The feature in common however, for these procedures, is the principle of first selecting picture parts, optimally focused, from a certain preselect priority-image, thereafter in the most expedient way, choose and/or blur the rest of the segments, in order to degrade image definition for other regions of the composite final picture (R). This depth-of-field reduction method may be regarded as a depth-of-field filter, providing a variable depth-of-field restraint, around a priority-image: The priority state of focus (P) is surrounded on each side, by two differently-focused states (P+ and P-), according to a preferable mode of application: Thus, the available depth-of-field interval becomes narrower as the object distances related to P- and P+ approach the priority-distance of P, from either side. Even segments selected from pictures, associated with P+ and P- may have fairly good image definition, being taken from the neighbourhood of some priority object in focus more or less, nevertheless appearing 'blurred' on the final step #5 picture (R), because of additional image blur being introduced by step #4a/b above. The two reference exposures P+ and P- should not be chosen too closely however to priority-image P , because the images would then become too similar and as a result, the 'decision process' according to steps #2-3 (above) would then suffer from a too high failure-frequency. This method is applicable for camera viewfinders, when performing manual focusing or when a photographer wants to concentrate his attention on certain objects, in other words become as little distracted as possible by image sharpness variations of other objects within the field of view. It's possible, according to another application, to simply replace the blurred segments from step #4 (above), with a uniform monochromatic RGB signature, like blue, thus placing the select objects of priority against a homogenous background without detail. A *de facto* separation from the fore- and background of select objects in focus, from a certain image #j, has thereby taken place, in this specific case. It's also possible to replace the blurred subimages from step #4 (above) with the corresponding segments from an entirely different picture, answering to a known want within the moving picture art, to create special effects, separating or merging various scenes.

Conditions prevailing for Instruments and Cameras of the present invention, may vary considerably and particularly the scenes registered, exhibit such diverse character that it comes hardly as a surprise, if the methods proposed exhibit varying utility in differing contexts or applications. Even image processing, of one and the same picture, may be improved if allowing the methods to work together, inter-acting by using each method where it performs best. The contrast method of the prior art for example is sensitive, thus suitable for sub-images of low contrast, while a template method may give fewer disturbances (artifacts), thus being more suitable for segments of high contrast. The contrast-enhanced average method may prove more advantageous for a viewfinder, where image quality conditions tend to be less severe, but where instead simplicity and speed are awarded. Plain summation- or average methods may be used whenever a viewfinder is purely optical and thus few other means are within sight, while apparently the segmental exposure control is most suitable in cases of large intensity variations across the scene (like when using flashlight or photographing against the light) and where (digital cameras) a considerable number of segments would be 'saturated', i.e. become over or under exposed, if not using this technique. The segmental variation method can be used where the scene being reproduced is demanding, i.e. 'problematic' in a sense that unacceptably high failure-frequencies result from single selection- or iteration-rounds. Finally, the depth-of-field reduction mode, may prove useful for cameras when selecting priority-focus through a viewfinder, a procedure often preceding some depth-of-field-improvement process. The way these different methods are united by means of writing macro programs (*.bat files etc) is such a well known engineering technique that there is no need here for repetition nor expanding upon the subject any further.

A careful pixel by pixel alignment of the differently focused/exposed images is presumed for all these above-mentioned multiple exposure methods, this being the basis for all pixel by pixel comparisons and superpositions in the process. Side translations, twist or tilt of the images projected, in relation to the detection surface of the sensor(s) must therefore not take place while focusing or performing other movements. This is a matter of mechanical stability and tolerances of the instruments and cameras involved, more or less. Residual alignment errors may still influence the electronic image registration, however these errors can be detected and corrected by other means like some image correlation program, readily available (being known technique, cf. Swedish Patent #8304620-1). All these methods and application examples presented, being subject to multiple exposures of the same scene, are fundamentally related, following same basic principles, i.e. the object of them all is to manipulate the depth of field for an image in a most efficient way.

A final appropriate comment, concluding this survey of select image-information methods, related to differently focused/exposed original image records, can therefore be that the methods, as described in parts #1-9 (above) may successfully be combined in various ways.

**Claims**

1. A camera comprising:

   - an objective lens (OB) for reproducing a scene composed of objects within the field of view at different distances from said lens;
   - a focusing device for setting said lens at various focal distances;
   - at least one electronic image detector (B, B1, B2..) having an entrance plane for detection and record of image information corresponding to images of said scene;
   - adjustable exposure device for setting the state of exposure as defined by exposure time, relative aperture and detector sensitivity in various combinations;
   - an electronic image memory (M) for storage of image information registered by said image detector; - an image-sharpness detector;

   wherein:

a) the focusing device is arranged for simultaneous and/or time sequential focusing of said objective lens at different object distances; and

b) the at least one image detector (B) for the time sequential image recording and at least two (B1, B2) for the simultaneous image recording is arranged such that, at least two differently recorded images of the same scene, i.e. images with differing focusing states and/or differing exposure states, are recorded in said electronic image memory;

c) subdividing means for causing said image-sharpness detector to subdivide the at least two images into segments, each formed by a plurality of pixels, evenly distributed all over said at least two images, in such a way that corresponding segments are all equally sized and have differing focusing states and/or differing exposure states and depict the same part of the scene to be reproduced; and

d) causing means for causing said image sharpness detector directly or indirectly to select between corresponding segments of the at least two differently focused images and forward to the electronic image memory that segments contributing to the optimal image resolution of the scene, and to merge the selected segments into a final image having higher resolution than each of said at least two differently focused images.

**characterized by** means being arranged for production of a depth of field-improved template image, from said differently-focused and/or exposed images, this template being subdivided into segments, like for said differently-registered images, and means being arranged for having the image-sharpness detector measure a similarity in-between each of said corresponding differently-registered segments on one hand and the template-image equivalent part on the other, then select and forward image information from such segments being most similar to the corresponding template segment, and merge this select image information, originating from each set of differently-registered segments, into a final image with better resolution than each individual image record by itself.

2. The camera of claim 1 **characterized by** means for measuring ranges with a range-finder, to parts of the scene in front of the objective lens.

3. The camera of claim 2 **characterized by** a focal distance-sensor being part of the range-finder, and where said distance-sensor is interacting with said image-sharpness detector in order to register those ranges for each part of the field of view, giving optimal image definition.

4. The camera of claim 1 **characterized by** means being included with said image-sharpness detector, for detection of light intensity differences in-between adjacent zones of pixel detectors, located in each multiple of said sub-fields of view.

5. The camera of claim 3 **characterized by** means for range-adjustment registration, *viz.* related to said objective lens, and means for saving in memory such object distances recorded, giving optimal image resolution for each segment, and this resulting in a three-dimensional record of a scene in front of said lens.

6. The camera of claims 1-5 and 7-21 **characterized by** the said detector has several parts, and they each record images being projected by said objective lens, i.e. depictions of the same scene, albeit differing as regards focusing and/or exposure

7. The camera of claim 1 **characterized by** said scene being illuminated with adjustable amounts of light by an artificial source of light, and means being assigned for control and variation of said illumination in such a way that each image registration of said scene is subject to an illumination-intensity level, aiming at optimal exposure for that object distance linked to the state of focus, associated with said registration.

8. The camera of claim 1 **characterized by** means being assigned for repeating said subdivision of differently-registered images once or several times, however each time with differing subdivision and/or differing size/shape of said segments, so that different resultant images are generated from one and the same scene depicted, and that a compound average-image of sorts is created, preferably by means of a pixel by pixel fusion/superposition of said resultant images.

9. The camera of claim 1 **characterized by**

e) an image-discriminatory device arranged in order to enable a preselection of at least one priority-image among said differently-registered segments and

f) means assigned to blur those parts of said select forwarded segments,

which do not belong to said priority-images, in effect degrading the depth of field for said merged final image again.

10. The camera of claim 9 **characterized by** said blurred segments being exchanged for corresponding segments from another image.

11. The camera of claim 1 **characterized by** an exposure meter and

a) said subdivision of images recorded, i.e. sub-images, corresponds to a pattern of sensor-parts in the associated detector plane.
b) means for having said exposure meter measure and register, for each said sub-sensor area, the light intensity projected by said objective lens, thus enabling estimates about which states of exposure are generating the most optimal light projection on each individual sensor-part and
c) means for exposing each of said sub-images, thereby registering each part individually, under a state of optimal exposure for each image part and
d) means for performing electronic image processing including restoration of originally projected light levels on respective sensor-parts and, if applicable, limited capacity of memory and/or presentation media necessitating further adjustments.

12. The camera of claim 1 **characterized by** an exposure meter and means being arranged for said exposure meter to select and forward from each set of said corresponding albeit differently exposed sub-images, that sub-image information corresponding to the most optimal states of exposure, i.e. contributing to the best detail-reproduction in the process of image registration, and merge this select segment information from each set of corresponding segments into a final image having better image detail-reproduction than each individually exposed image record by itself.

13. The camera of claim 11 or 12 **characterized by** further means arranged for performing image processing of whichever claim 1-10 or 15, creating depth of field-improved final images.

14. The camera of claim 11, **characterized by** means being arranged for image processing where colour- and/or white-balance of said segments of the resultant image, are adjusted individually

15. The camera of claim 1 **characterized by**

c) the differently-focused images being arranged for superposition into a compound image and
d) means being arranged for defocusing said (Ma) image into a defocused image (Mb) and
e) image intensity of said image (Mb) being arranged for a pixel-by-pixel reduction by a factor k into an image (Mbk) and finally
f) a pixel by pixel subtraction of said image (Mbk) from said compound image being arranged,

giving the resultant final image (S), having better image definition and depth of field-properties than each individual image record by itself.

16. The camera of claim 15 **characterized by** means for causing said resultant final image (S) be in video or still photo applications instead.

17. A method of photographing a scene in front of an objective lens (OB) of a camera in which the recording of at least two images of the same scene takes place via at least one electronic image detector (B1, B2, B3... ), and the exposure is executed through the objective lens of the camera, so that the at least two images, with differing focusing states and/or differing exposure states, are stored;
comprising the steps of:

- subdividing, by means of an image-sharpness detector of the camera, the at least two images of the same scene into corresponding segments all equally sized and evenly distributed all over said at least two images, in such a way that corresponding segments on said at least two images have differing focusing states and/or differing exposure states and depict the same part of the scene to be reproduced; - directly or indirectly selecting between corresponding segments of said at least two differently focused images, by means of an image sharpness detector of the camera, and forwarding to an electronic image memory (M) of the camera that segments contributing to the optimal image resolution of the scene, and

- merging the selected segments into a final image having better resolution than each of said at least two differently focused images;

**characterized by** using means being arranged for production of a depth of field-improved template image, from said differently-focused and/or exposed images, this template being subdivided into segments, like for said differently-registered images, and using means being arranged for having the image-sharpness detector measure a similarity in-between each of said corresponding differently-registered segments on one hand and the template-image equivalent part on the other, then select and forward image information from such segments being most similar to the corresponding template segment, and merge this select image information, originating from each set of differently-registered segments, into a final image with better resolution than each individual image record by itself.

18. The method of claim 17 **characterized by** said recordings being executed in one context while said subdivision into segments and assembly of the same sub-images is taking place in another context and at another place.

19. The method of claim 17 **characterized by** a registration-procedure where a firstly-registered image record is transferred to an image-memory, and a subsequent recording is compared segment by segment to the one present in the image memory, thereby that segment, of the two, having the better image definition, is selected, being retained in the image memory, and said method-steps being iterated for subsequent images recorded, so that the resulting final Image ends up in said image memory.

20. The camera or method of claims 1 or 17 **characterized by** means being assigned for using different states of magnification when performing image registration and/or when processing said images.

21. The camera or method of claims 1 or 17 **characterized by** image correlation means being assigned for alignment of said pictures, thus correcting residual alignment errors in between them.

## Patentansprüche

1. Kamera umfassend:

   - eine Objektivlinse (ON) zur Abbildung einer Szene zusammengesetzt aus Objekten im Sichtfeld in verschiedenen Abständen von der Linse;
   - eine Fokussiereinrichtung zum Einstellen der Linse auf verschiedene Fokalabstände;
   - wenigstens einen elektronischen Bilddetektor (B, B1, B2, ...), der eine Eintrittsebene zur Detektion und Aufnahme von Bildinformationen entsprechend Bildern der Szene aufweist;
   - eine einstellbare Belichtungseinrichtung zum Einstellen des durch die Belichtungszeit, die relative Blende und die Detektorempfindlichkeit in verschiedenen Kombinationen vorgegebenen Belichtungszustandes;
   - ein elektronischer Bildspeicher (M) zum Speichern von durch den Detektor verzeichneten Bildinformationen;
   - ein Bildschärfedetektor;

   wobei:

   a) die Fokussiereinrichtung zum gleichzeitigen und/oder zeitsequenziellen Fokussieren der Objektivlinse auf verschiedene Objektabstände ausgebildet ist;
   b) wenigstens ein Bilddetektor (B) für das zeitsequenzielle Aufnehmen und wenigstens zwei (B1, B2) für das gleichzeitige Aufnehmen von Bildern so angeordnet sind, dass wenigstens zwei verschiedene aufgenommenen Bilder der gleichen Szene, d.h. Bilder mit unterschiedlichem Fokussierungszustand und/oder unterschiedlichem Belichtungszustand, im elektronischen Bildspeicher aufgenommen werden;
   c) Unterteilungsmittel zum Verursachen, dass der Bildschärfedetektor die wenigstens zwei Bilder in Segmente unterteilt, jedes gebildet aus eine Mehrzahl an Bildpunkten, die gleichmäßig über die gesamten wenigstens zwei Bilder verteilt sind, so dass sich entsprechende Segmente gleich groß sind, und einen unterschiedlichen Fokussierungszustand und/oder unterschiedlichen Belichtungszustand haben und den gleichen Ausschnitt der wiederzugebenen Szene abbilden;
   und
   d) Verursachungsmittel zum Verursachen, dass der Bildschärfedetektor direkt oder indirekt zwischen sich entsprechenden Segmenten der wenigstens zwei unterschiedlich fokussierten Bilder wählt und das Segment an den elektronischen Bildspeicher weiterleitet, welches zur optimalen Bildauflösung der Szene beiträgt, und die ausgewählten Segmente zu einem endgültiges Bild zusammenfügt, welches eine höhere Auflösung als jedes der wenigstens zwei unterschiedlich fokussierten Bilder aufweist;

**gekennzeichnet durch**
Mittel, ausgebildet für die Erstellung eines tiefenschärfeverbesserten Vorlagebildes aus den unterschiedlich fokussierten und/oder belichteten Bildern, wobei die Vorlage vergleichbar zu den unterschiedlich verzeichneten Bilder in Segmente unterteilt ist, und Mittel zum Verursachen, dass der Bildschärfedetektor die Ähnlichkeiten zwischen jedem entsprechenden unterschiedlich verzeichneten Segment auf der einen Seite und dem entsprechenden Teil des Vorlagebildes auf der andere Seite misst und dann die Bildinformation dieses Segmentes auswählt und weiterleitet, welches dem entsprechenden Vorlagebildsegment am ähnlichsten ist, und diese aus jedem Satz von unterschiedlich verzeichneten Segmenten ausgewählte Bildinformation zu einem endgültigen Bild zusammenfügt, welches eine höhere Auflösung als jedes einzelne der aufgenommenen Bilder für sich genommen aufweist.

2. Kamera nach Anspruch 1, **gekennzeichnet durch** Mittel zum Messen von Entfernungen zu Teilen der Szene vor der Objektivlinse mit einem Entfernungsmesser.

3. Kamera nach Anspruch 2, **gekennzeichnet durch** einen Fokalabstandssensor als Teil des Entfernungsmessers, wobei der Entfernungsmesser mit dem Bildschärfedetektor interagiert, um die Entfernungen für jeden Teil des Sichtfeldes für eine optimale Bilddefinition zu messen.

4. Kamera nach Anspruch 1, **gekennzeichnet durch** in den Bildschärfedetektor integrierte Mittel zum Ermitteln von Lichtintensitätsunterschieden zwischen benachbarten Zonen von Bildpunktdetektoren, die in jeder Mehrzahl der Sichtfeldunterbereiche angeordnet sind.

5. Kamera nach Anspruch 3, **gekennzeichnet durch** Mittel zur Registrierung von Entfernungsänderungen, nämlich in Relation zur Objektivlinse, und Mittel zum Speichern der aufgenommenen Objektabstände in einem Speicher, ergebend die optimal Bildauflösung für jedes Segment, und resultierend in einer dreidimensionalen Aufnahme der Szene vor der Linse.

6. Kamera nach einem der Ansprüche 1-5 und 7-21 **gekennzeichnet dadurch, dass** der Detektor mehrere Teile hat, und jeder von der Objektivlinse projizierte Bilder, d.h. Abbildungen derselben Szene, aufnimmt, die sich jedoch in Fokussierung und/oder Belichtung unterscheiden.

7. Kamera nach Anspruch 1 **gekennzeichnet dadurch, dass** die Szene durch eine einstellbare Menge aus Licht mit Licht künstlicher Lichtquellen ausgeleuchtet wird, und durch Mittel die zur Steuerung und Veränderung der Lichtquellen ausgebildet sind, sodass jedes verzeichnete Bild der Szene einem Ausleuchtungsintensitätslevel unterliegt, das auf eine optimale Belichtung für den mit dem mit der Aufnahme verbundenen Fokussierungszustand verknüpften Objektabstand abzielt.

8. Kamera nach Anspruch 1, **gekennzeichnet durch** Mittel zur einmaligen oder mehrmaligen Wiederholung der Unterteilung der unterschiedlich verzeichneten Bilder, jedes Mal mit unterschiedlichen Unterteilungen und/oder unterschiedlicher Größe/Form der Segmente, sodass unterschiedliche resultierende Bilder ein und derselben Szene generiert werden, und dass eine Art von Durchschnittsmischungsbild erzeugt wird, vorzugsweise **durch** eine bildpunktweise Verschmelzung/Überlagerung der resultierenden Bilder.

9. Kamera nach Anspruch 1, **gekennzeichnet durch**

e) ein Bild-Diskriminationsmittel, welches eine Vorauswahl wenigstens eines Prioritätsbildes aus den unterschiedlich verzeichneten Segmenten ermöglicht, und
f) Mittel zum Verwischen derjenigen Teile der weitergeleiteten Segmente, die nicht zum Prioritätsbild gehören, wodurch die Tiefenschärfe des zusammengesetzten endgültigen Bildes wieder degradiert wird.

10. Kamera nach Anspruch 9, **gekennzeichnet dadurch, dass** die verwischten Segmente durch entsprechende Segmente anderer Bilder ausgetauscht werden.

11. Kamera nach Anspruch 1, **gekennzeichnet durch** einen Belichtungsmesser und

a) die Unterteilung der aufgenommen Bilder, d.h. Unterbilder, einem Muster von Sensorteilen in der zugeordneten Detektorebene entspricht;

b) Mittel zum Erreichen, dass der Belichtungsmesser für jeden Sensorunterbereich die **durch** die Objektivlinse projizierte Lichtintensität misst und registriert, wodurch Abschätzungen, welche Belichtungszustände die besten Lichtabbildungen auf jeden einzelnen Sensorteil generieren, möglich werden; und

c) Mittel zum Beleuchten jedes Unterbildes, wodurch jeder Teil einzeln in einem Zustand optimaler Belichtung des jeweiligen Teils verzeichnet wird und

d) Mittel zur elektronischen Bildverarbeitung umfassend die Wiederherstellung der originär projizierten Lichtlevel auf den entsprechenden Sensorteilen und, soweit anwendbar, eine, weitere Anpassung erfordernde begrenzte Speicher- und/oder Präsentationsmedienkapazität.

**12.** Kamera nach Anspruch 1, **gekennzeichnet durch** einen Belichtungsmesser und Mittel, ausgebildet, dass der Belichtungsmesser aus jedem Satz von entsprechenden, wenn auch unterschiedlich belichteter Unterbilder diejenige Unterbildinformation entsprechend der optimalen Belichtung, d.h. zur besten Detailwiedergabe im Verfahren der Verzeichnens eines Bildes beitragend, auswählt, und diese ausgewählte Segmentinformation aus jedem Satz entsprechende Segmente in einem endgültigen Bild zusammenfügt, welches eine bessere Detailwiedergabe hat als die einzelnen, individuell belichteten Bilder für sich genommen.

**13.** Kamera nach Anspruch 11 oder 12, **gekennzeichnet durch** weitere zur Ausführung einer Bildbearbeitung nach einem der Ansprüche 1-10 oder 15 ausgebildete Mittel zur Schaffung eines tiefenschärfeverbesserten endgültigen Bildes.

**14.** Kamera nach Anspruch 11, **gekennzeichnet durch** zur Bildbearbeitung ausgebildete Mittel, um Farb- und/oder Weißabgleich der Segmente des resultierenden Bildes individuell anzupassen.

**15.** Kamera nach Anspruch 1, **gekennzeichnet durch**

c) die Anordnung verschieden fokussierten Bilder zur Überlagerung in ein Mischbild

d) Mittel zur Defokussierung des Bildes (Ma) in ein defokussiertes Bild (Mb)

e) die Anordnung der Bildintensität des Bildes (Mb) für eine bildpunktweise Reduktion um einen Faktor k zu einem Bild (Mbk) und schlussendlich

f) die Anordnung einer bildpunktweisen Subtraktion des Bildes (Mbk) vom Mischbild, woraus ein endgültiges Bild (S) resultiert, welches verbesserte Bilddefinition und Tiefenschärfeeigenschaften als jedes einzelne aufgenommene Bild für sich genommen aufweist.

**16.** Kamera nach Anspruch 15, **gekennzeichnet durch** Mittel zum Verursachen, dass das resultierende endgültige Bild (S) in Video- oder Stillbild-Anwendungen ist.

**17.** Verfahren zur Aufnahme eine Szene vor eine Objektivlinse (OB) einer Kamera, in der wenigstens zwei Bilder derselben Szene durch wenigstens einen elektronischen Bilddetektor (B1, B2, B3,...) aufgenommen werden, und die Belichtung durch die Objektivlinse der Kamera durchgeführt wird, sodass die wenigstens zwei Bilder mit unterschiedlichem Fokussierungszustand und/oder unterschiedlichem Belichtungszustand gespeichert werden; umfassend die Schritte

- Unterteilen der wenigstens zwei Bilder derselben Szene in sich entsprechende gleich große und gleichmäßig über die wenigstens zwei Bilder verteilte Segmente mithilfe eines Bildschärfedetektors der Kamera, sodass sich entsprechende Segmente auf den wenigstens zweien Bildern unterschiedliche Fokussierungszustände und/oder unterschiedliche Belichtungszustände aufweisen und denselben Teil der wiederzugeben Szene abbilden;

- direktes oder indirektes Auswählen zwischen sich entsprechenden Segmenten der wenigstens zwei unterschiedlich fokussierten Bilder mithilfe eines Bildschärfedetektors der Kamera und Weiterleiten desjenigen Segmentes, welches zur optimalen Bildauflösung der Szene Beiträge, an einen elektronischen Bildspeicher (M) der Kamera; und

- zusammenfügen der ausgewählten Segmente in ein endgültiges Bild mit einer besseren Auflösung als jedes der wenigstens zwei unterschiedlich fokussierten Bilder;

**gekennzeichnet durch**

die Verwendung von Mitteln, ausgebildet für die Erstellung eines tiefenschärfeverbesserten Vorlagebildes aus den unterschiedlich fokussierten und/oder belichteten Bildern, wobei die Vorlage vergleichbar zu den unterschiedlich verzeichneten Bilder in Segmente unterteilt ist, und Mittel zum Verursachen, dass der Bildschärfedetektor die Ähnlichkeiten zwischen jedem entsprechenden unterschiedlich verzeichneten Segment auf der einen Seite und dem entsprechenden Teil des Vorlagebildes auf der andere Seite misst und dann die Bildinformation dieses Segmentes auswählt und weiterleitet, welches dem entsprechenden Vorlagebildsegment am ähnlichsten ist, und diese aus jedem Satz von unterschiedlich verzeichneten Segmenten ausgewählte Bildinformation zu einem endgültigen Bild zusammenfügt, welches eine höhere Auflösung als jedes einzelne der aufgenommenen Bilder für sich genommen aufweist.

18. Verfahren nach Anspruch 17 **gekennzeichnet dadurch, dass** die Aufnahmen in einem Kontext durchgeführt werden, während die Unterteilung in Segmente und Zusammensetzung der Unterbilder in einem anderen Kontext und an einem anderen Ort stattfinden.

19. Verfahren nach Anspruch 17 **gekennzeichnet durch** ein Registrierungsverfahren, bei dem eine zuerst registriertes Bildaufnahme zu einem Bildspeicher übertragen wird, und eine anschließende Aufnahme segmentweise mit dem im Bildspeicher enthaltenen verglichen wird, wobei dasjenige Segment der beiden mit der besseren Bilddefinition ausgewählt und im Bildspeicher behalten wird und diese Verfahrensschritte für nachfolgend aufgenommene Bilder iteriert wird, sodass das endgültige Bild im Bildspeicher landet.

20. Kamera oder Verfahren nach Anspruch 1 oder 17 **gekennzeichnet durch** Mittel, ausgebildet, unterschiedliche Vergrößerungen während der Bildaufzeichnung und/oder während der Bildverarbeitung zu verwenden.

21. Kamera oder Verfahren nach Anspruch 1 oder 17 **gekennzeichnet durch** Bildkorrelationsmittel, ausgebildet zum Ausrichten der Bilder, wodurch verbliebene Ausrichtungsfehler zwischen den Bildern korrigiert werden.

**Revendications**

1. Caméra comprenant :

   - un objectif de mise au point (OB) pour reproduire une scène composée d'objets dans le champ de vision à différentes distances dudit objectif ;
   - un dispositif de mise au point pour régler ledit objectif à diverses distances focales ;
   - au moins un détecteur d'image électronique (B, B1, B2 ...) ayant un plan d'entrée pour la détection et l'enregistrement d'informations d'image correspondant à des images de ladite scène ;
   - un dispositif d'exposition ajustable pour régler l'état d'exposition tel que défini par diverses combinaisons de temps d'exposition, d'ouverture relative et de sensibilité du détecteur ;
   - une mémoire d'image électronique (M) pour la mémorisation d'informations d'image enregistrées par ledit détecteur d'image ;
   - un détecteur de netteté d'image ;

   dans laquelle :

   a) le dispositif de mise au point est agencé pour les mises au point simultanées et/ou séquentielles dans le temps dudit objectif de mise au point à différentes distances d'objet ; et
   b) ledit au moins un détecteur d'image (B) pour les enregistrements d'image séquentiels dans le temps et au moins deux détecteurs (B1, B2) pour les enregistrements d'image simultanés sont agencés de sorte qu'au moins deux images enregistrées différemment de la même scène, c'est-à-dire des images avec différents états de mise au point et/ou différents états d'exposition, soient enregistrées dans ladite mémoire d'image électronique ;
   c) des moyens de subdivision pour amener ledit détecteur de netteté d'image à subdiviser lesdites au moins deux images en segments, formés chacun par une pluralité de pixels, tous répartis uniformément sur lesdites au moins deux images, de manière à ce que les segments correspondants soient tous de dimensions uniformes et aient différents états de mise au point et/ou différents états d'exposition et représentent la même partie de la scène à reproduire ; et
   d) des moyens de commande pour amener ledit détecteur de netteté d'image à effectuer une sélection directement ou indirectement entre des segments correspondants desdites au moins deux images mises au point différemment et à acheminer vers la mémoire d'image électronique les segments contribuant à la résolution d'image optimale de la scène, et à fusionner les segments sélectionnés en une image finale ayant une résolution plus grande que chacune desdites au moins deux images mises au point différemment,

**caractérisée en ce que** des moyens sont agencés pour la production d'une image de modèle à profondeur de champ améliorée, à partir desdites images mises au point et/ou exposées différemment, ce modèle étant subdivisé en segments, comme pour lesdites images enregistrées différemment, et des moyens sont agencés pour amener le détecteur de netteté d'image à mesurer une similarité entre chacun desdits segments enregistrés différemment correspondants d'une part et la partie équivalente de l'image de modèle d'autre part, ensuite à sélectionner et acheminer les informations d'image provenant des segments qui sont les plus similaires au segment de modèle correspondant, et à fusionner ces informations d'image sélectionnées, provenant de chaque ensemble de segments enregistrés différemment, en une image finale avec une meilleure résolution que chaque enregistrement d'image individuel en lui-même.

2. Caméra selon la revendication 1, **caractérisée par** des moyens pour mesurer les distances avec un télémètre jusqu'à des parties de la scène à l'avant de l'objectif de mise au point.

3. Caméra selon la revendication 2, **caractérisée en ce qu'**un capteur de distance focale fait partie du télémètre, et dans laquelle ledit capteur de distance interagit avec ledit détecteur de netteté d'image afin d'enregistrer ces distances pour chaque partie du champ de vision, donnant une définition d'image optimale.

4. Caméra selon la revendication 1, **caractérisée en ce que** des moyens sont inclus avec ledit détecteur de netteté d'image, pour la détection de différences d'intensité de lumière entre des zones adjacentes de détecteurs de pixel, situés dans chaque multiple desdits champs de vision secondaires.

5. Caméra selon la revendication 3, **caractérisée par** des moyens pour l'enregistrement d'ajustement de distance, c'est-à-dire en relation avec ledit objectif de mise au point, et des moyens pour sauvegarder dans une mémoire ces distances d'objet enregistrées, donnant une résolution d'image optimale pour chaque segment, et cela résultant en un enregistrement tridimensionnel d'une scène à l'avant dudit objectif.

6. Caméra selon les revendications 1 à 5 et 7 à 21, **caractérisée en ce que** ledit détecteur comporte plusieurs parties, et elles enregistrent chacune des images projetées par ledit objectif de mise au point, c'est-à-dire des représentations de la même scène, bien que différentes en ce qui concerne la mise au point et/ou l'exposition.

7. Caméra selon la revendication 1, **caractérisée en ce que** ladite scène est éclairée avec des quantités ajustables de lumière par une source artificielle de lumière, et des moyens sont attribués pour commander et modifier ledit éclairage de manière à ce que chaque enregistrement d'image de ladite scène soit soumis à un niveau d'intensité d'éclairage, visant à une exposition optimale pour cette distance d'objet liée à l'état de mise au point, associé au dit enregistrement.

8. Caméra selon la revendication 1, **caractérisée en ce que** des moyens sont attribués pour répéter ladite subdivision des images enregistrées différemment une fois ou plusieurs fois, cependant à chaque fois avec une subdivision différente et/ou une taille/forme différente desdits segments, de sorte que différentes images résultantes soient générées à partir d'une seule et même scène représentée, et **en ce qu'**une image moyenne composée de types est créée, de préférence au moyen d'une fusion/superposition pixel par pixel desdites images résultantes.

9. Caméra selon la revendication 1, **caractérisée par**

   e) un dispositif de discrimination d'image agencé afin de permettre une présélection d'au moins une image prioritaire parmi lesdits segments enregistrés différemment, et
   f) des moyens attribués pour flouter les parties desdits segments acheminés sélectionnés, qui n'appartiennent pas aux dites images prioritaires, avec pour effet de dégrader la profondeur de champ pour ladite image finale fusionnée de nouveau.

10. Caméra selon la revendication 9, **caractérisée en ce que** lesdits segments floutés sont remplacés par des segments correspondants provenant d'une autre image.

11. Caméra selon la revendication 1, **caractérisée par** un appareil de mesure d'exposition et

a) ladite subdivision des images enregistrées, c'est-à-dire les images secondaires, correspond à un motif de parties de capteur dans le plan de détecteur associé,

b) des moyens pour amener ledit appareil de mesure d'exposition à mesurer et enregistrer, pour chaque dite zone de capteur secondaire, l'intensité de lumière projetée par ledit objectif de mise au point, permettant ainsi des estimations des états d'exposition qui génèrent la projection de lumière la plus optimale sur chaque partie de capteur individuelle, et

c) des moyens pour exposer chacune desdites images secondaires, enregistrant de ce fait chaque partie individuellement, dans un état d'exposition optimale pour chaque partie d'image, et

d) des moyens pour effectuer un traitement d'image électronique comprenant le rétablissement des niveaux de lumière projetés d'origine sur les parties de capteur respectives et, si cela est applicable, des moyens à capacité de mémoire limitée et/ou de présentation nécessitant des ajustements supplémentaires.

**12.** Caméra selon la revendication 1, **caractérisée par** un appareil de mesure d'exposition et des moyens agencés pour que ledit appareil de mesure d'exposition sélectionne et achemine, à partir de chaque ensemble desdites images secondaires bien que différemment exposées correspondantes, les informations d'image secondaires correspondant aux états les plus optimaux d'exposition, c'est-à-dire contribuant à la meilleure reproduction des détails dans le processus d'enregistrement d'image, et fusionne les informations de segment sélectionnées provenant de chaque ensemble de segments correspondants en une image finale ayant une meilleure reproduction de détail d'image que chaque enregistrement d'image exposée individuellement en lui-même.

**13.** Caméra selon la revendication 11 ou 12, **caractérisée en ce que** des moyens supplémentaires sont agencés pour effectuer un traitement d'image selon l'une quelconque des revendications 1 à 10 ou 15, créant des images finales à profondeur de champ améliorée.

**14.** Caméra selon la revendication 11, **caractérisée en ce que** des moyens sont agencés pour effectuer un traitement d'image dans lequel les équilibres des couleurs et/ou des blancs desdits segments de l'image résultante sont ajustés individuellement.

**15.** Caméra selon la revendication 1, **caractérisée en ce que**

c) les images mises au point différemment sont agencées pour une superposition en une image composée, et
d) des moyens sont agencés pour défocaliser ladite image (Ma) en une image défocalisée (Mb), et
e) l'intensité d'image de ladite image (Mb) est agencée pour une réduction pixel par pixel d'un facteur k en une image (Mbk), et finalement
f) une soustraction pixel par pixel de ladite image (Mbk) de ladite image composée est agencée,

donnant l'image finale résultante (S), ayant de meilleures propriétés de définition d'image et de profondeur de champ que chaque enregistrement d'image individuel en lui-même.

**16.** Caméra selon la revendication 15, **caractérisée par** des moyens pour amener ladite image finale résultante (S) à être dans des applications vidéo ou photographiques au lieu de cela.

**17.** Procédé de photographie d'une scène à l'avant d'un objectif de mise au point (OB) d'une caméra, dans lequel l'enregistrement d'au moins deux images de la même scène a lieu par l'intermédiaire d'au moins un détecteur d'image électronique (B1, B2, B3 ...), et l'exposition est exécutée par l'intermédiaire de l'objectif de mise au point de la caméra, de sorte que lesdites au moins deux images, avec différents états de mise au point et/ou différents états d'exposition, soient mémorisées ;
comprenant les étapes :

- de subdivision, au moyen d'un détecteur de netteté d'image de la caméra, desdites au moins deux images de la même scène en des segments correspondants tous de dimensions uniformes et tous répartis uniformément sur lesdites au moins deux images, de manière à ce que des segments correspondants sur lesdites au moins deux images aient différents états de mise au point et/ou différents états d'exposition et représentent la même partie de la scène à reproduire ;
- de sélection, directement ou indirectement, de segments correspondants desdites au moins deux images mises au point différemment, au moyen d'un détecteur de netteté d'image de la caméra, et d'acheminement vers une mémoire d'image électronique (M) de la caméra des segments contribuant à la résolution d'image optimale de la scène, et

- de fusion des segments sélectionnés en une image finale ayant une meilleure résolution que chacune desdites au moins deux images mises au point différemment ;

**caractérisé en ce que** des moyens d'utilisation sont agencés pour la production d'une image de modèle à profondeur de champ améliorée, à partir desdites images mises au point et/ou exposées différemment, ce modèle étant subdivisé en segments, comme pour lesdites images enregistrées différemment, et les moyens d'utilisation sont agencés pour amener le détecteur de netteté d'image à mesurer une similarité entre chacun desdits segments enregistrés différemment correspondants d'une part et la partie équivalente d'image de modèle d'autre part, ensuite à sélectionner et acheminer les informations d'image provenant des segments qui sont les plus similaires au segment de modèle correspondant, et à fusionner les informations d'image sélectionnées, provenant de chaque ensemble de segments enregistrés différemment, en une image finale avec une meilleure résolution que chaque enregistrement d'image individuel en lui-même.

18. Procédé selon la revendication 17, **caractérisé en ce que** lesdits enregistrements sont exécutés dans un contexte, tandis que ladite subdivision en segments et ledit assemblage des susdites images secondaires ont lieu dans un autre contexte et à un autre emplacement.

19. Procédé selon la revendication 17, **caractérisé par** une procédure d'enregistrement dans laquelle un enregistrement d'image enregistré en premier est transféré à une mémoire d'image, et un enregistrement subséquent est comparé segment par segment à celui présent dans la mémoire d'image, moyennant quoi le segment, parmi les deux, ayant la meilleure définition d'image, est sélectionné, en étant maintenu dans la mémoire d'image, et lesdites étapes de procédé sont réitérées pour les images enregistrées par la suite, de sorte que l'image finale résultante aboutisse dans ladite mémoire d'image.

20. Caméra ou procédé selon la revendication 1 ou 17, **caractérisé en ce que** des moyens sont attribués pour utiliser différents états de grossissement lors de l'exécution de l'enregistrement d'image et/ou lors du traitement desdites images.

21. Caméra ou procédé selon la revendication 1 ou 17, **caractérisé en ce que** des moyens de corrélation d'images sont attribués pour l'alignement desdites images, corrigeant ainsi les erreurs d'alignement résiduelles entre elles.

F I G 1

EP 1 348 148 B2

FIG 2

FIG 3A

FIG 3B

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4661986 A
- US 6201899 B
- US 4078171 A
- US 4078172 A
- US 4741605 A
- WO 0022566 A
- WO 9725690 A

- US 5325449 A
- US 5172236 A
- SE 00048363
- SE 450671
- US 4826302 A
- US 6025957 A
- SE 83046201

**Non-patent literature cited in the description**

- *FOTO,* 1978

- **OLIVER ROCKINGER.** *Multiresolution-Verfahren zur Fusion dynamischer Bildfolgen,* 1999